# EUROPEAN PATENT APPLICATION

(11) **EP 4 383 674 A1**
(43) Date of publication of application: **12.06.2024**
(21) Application number: 22866310.0
(22) Date of filing: 09.08.2022
(51) Int. Cl.: H04L 45/74, H04L 47/125

(54) **MESSAGE PROCESSING METHOD AND RELATED APPARATUS**

(30) Priority: 09.09.2021 CN 202111057700
(71) Applicant: Huawei Technologies Co., Ltd., Shenzhen, Guangdong 518129 (CN)
(72) Inventor: MAO, Jianwei, Shenzhen, Guangdong 518129 (CN); CHEN, Xia, Shenzhen, Guangdong 518129 (CN); LIU, Bing, Shenzhen, Guangdong 518129 (CN)
(74) Representative: Pfenning, Meinig & Partner mbB
(86) International application number: PCT/CN2022/111220
(87) International publication number: WO 2023/035836

(57) **Abstract**

Embodiments of the present invention disclose a packet processing method and a related apparatus, applied to a network device. The method includes: receiving a first packet sent by a client, where the first packet includes target identification information, the target identification information is used to identify a target destination, the target destination is a destination selected from N candidate destinations by the network device for the client, and N is an integer greater than 0; and determining the target destination based on the target identification information, and forwarding the first packet to the target destination, to trigger the target destination to process the first packet. According to the packet processing method provided in embodiments of the present invention, session affinity between the client and a server can be implemented, to ensure continuity of a client service, and improve user experience.

## Description

This application claims priority to Chinese Patent Application No. 202111057700.0, filed with the China National Intellectual Property Administration on September 9, 2021 and entitled "PACKET PROCESSING METHOD AND RELATED APPARATUS", which is incorporated herein by reference in its entirety.

### TECHNICAL FIELD

The present invention relates to the field of communication technologies, and in particular, to a packet processing method and a related apparatus.

### BACKGROUND

Currently, with rapid development of 5G, there are new requirements on data transmission bandwidth, a latency, an application, service performance, and the like. Different from conventional cloud computing in which a computing capability, a storage capability, and network management are centralized, in edge computing, a multi-access edge computing (Multi-access Edge Computing, MEC) site provides an IT service environment and a cloud computing capability for a network edge. Partial caching and computing are performed at the network edge to reduce a transmission latency, and finally millisecond-level applications can be implemented. Therefore, in an edge computing scenario, when a user initiates a new request, a network device may schedule a request data packet to the MEC site for processing. In addition, the network device further needs to identify an association between the user and the MEC site in an interaction process, to ensure that requests associated with a same user are allocated to a same MEC site for response. This mechanism is usually referred to as session affinity.

In a common session affinity solution, a network device generates a session table, to record user information and corresponding routing information (that is, information about reaching a destination site). For example, information such as a quintuple (a source IP address, a destination IP address, a protocol number, a source port, and a destination port) of each user and an SRv6 tunnel or the quintuple and a next-hop address is recorded in the session table. When a user initiates a request again, the network device may query the session table for the corresponding routing information based on the user information, to determine the destination site, and send a request data packet to the destination site for response, to implement session affinity.

However, in an actual application process, it is found that with the growing quantity of access users, the session table occupies more storage resources. In addition, when the user switches a network, problems such as a traffic interruption and an application request failure may occur. Therefore, how to provide a packet processing method that can be used to implement session affinity between a client and a server, to ensure continuity of a client service is an urgent problem to be resolved.

### SUMMARY

A technical problem to be resolved in embodiments of the present invention is to provide a packet processing method and a related apparatus, to ensure continuity of a client service, and improve user experience.

According to a first aspect, an embodiment of the present invention provides a packet processing method, applied to a network device. The method includes: receiving a first packet sent by a client, where the first packet includes target identification information, the target identification information is used to identify a target destination, the target destination is a destination selected from N candidate destinations by the network device for the client, and N is an integer greater than 0; and determining the target destination based on the target identification information, and forwarding the first packet to the target destination, to trigger the target destination to process the first packet.

In an edge computing-based session affinity scenario, after the client establishes a data flow with the target destination (for example, a target MEC site), the network device (for example, an ingress router) needs to forward the first packet (for example, a request data packet) initiated by the client to the target MEC site for processing, to ensure continuity of a client service. Edge computing means that a plurality of candidate destinations (for example, a plurality of candidate MEC sites) may share a same service IP address to provide services for the client. However, because a traffic identifier in the request data packet points to a service IP address of the target MEC site, and the service IP address corresponds to a plurality of MEC sites, the ingress router cannot forward the request data packet to a specific target MEC site for processing only based on the traffic identifier. In the conventional technology, session affinity is implemented in a manner of recording a session table, that is, a mapping relationship between client information and target routing information of the target MEC site is recorded in the session table. When receiving the request data packet sent by the client, the ingress router searches, based on the client information in the request data packet, the session table for the target routing information corresponding to the client information, and forwards the request data packet to the target MEC site, so that the target MEC site processes the request data packet, to ensure the continuity of the client service. However, in an actual application process, it is found that with the growing quantity of access users, more client information and corresponding target routing information are recorded in the session table, more storage resources of the ingress router are occupied, and it is more difficult for the ingress router to maintain the session table. In addition, after the client establishes the data flow with the target MEC site by using the QUIC protocol, if the client switch a network, the client information changes (for example, a source IP address of the client changes). However, because a plurality of available traffic connection identifiers (QUIC connection IDs) are negotiated between the client and the target MEC site, after the source IP address of the client changes, a standby QUIC connection ID can be used, so that the client and the target MEC site can still identify each other. In this case, no new data flow is established between the client and the target MEC site, but an originally established data flow is used for data exchange. Further, after receiving a request data packet that carries a new source IP address (that is, updated client information), the ingress router cannot find, based on the new source IP address, corresponding target routing information in the session table, and this causes a problem such as a client service interruption.

However, in embodiments of the present invention, a network allocates target identification information (for example, destination selection information) to the client, so that the first packet (for example, a request data packet) initiated by the client carries the destination selection information, and the network device (for example, an ingress router) schedules and forwards, based on the information, the request data packet of the client to the target destination (for example, a target MEC site) for response. Specifically, after the client establishes a data flow with the target destination, the client records the destination selection information (for example, information such as an identifier of the target destination) allocated by the network (for example, the ingress router in the network), so that the request data packet initiated by the client carries the destination selection information. Further, after receiving the request data packet initiated by the client, the ingress router no longer searches, based on client information, a session table to determine the target destination, but identifies the destination selection information carried in the request data packet, and then sends the request data packet to the target destination, so that the target destination processes the request data packet, to ensure continuity of a client service. In other words, according to the method provided in embodiments of the present invention, because information about the access client does not need to be recorded, a problem of occupying excessive storage resources of the ingress router is avoided. In addition, the destination selection information is allocated by the network. For example, the destination selection information may be allocated by the ingress router. Therefore, when the client information changes, the information does not change, and the ingress router determines the target destination based on the destination selection information, to avoid a problem of a service interruption caused by the change of the client information, ensure the continuity of the client service, and improve user experience. In addition, the destination selection information is valid only inside the network, and it may also be understood that the destination selection information is valid only locally on the ingress router. In other words, the ingress router determines the target destination based on the information, but the client cannot directly determine the target routing information of the target destination based on the information. This avoids a problem that a network security risk is caused by directly exposing the target routing information to the client as an identifier, and improves network security.

In a possible implementation, the determining the target destination based on the target identification information, and forwarding the first packet to the target destination includes: determining, based on a destination information table and the target identification information, target routing information corresponding to the target destination, where the destination information table includes a mapping relationship between identification information of the N candidate destinations and corresponding routing information; and forwarding the first packet to the target destination based on the target routing information.

In this embodiment of the present invention, after receiving the first packet (for example, a request data packet) initiated by the client, the network device (for example, an ingress router) no longer searches, based on client information, a session table to determine target routing information of a target destination, but identifies the target identification information (for example, destination selection information) carried in the request data packet. The network device may query the destination information table, to determine the target routing information corresponding to the destination selection information, and then sends the request data packet to the target destination based on the target routing information, so that the target destination processes the request data packet, to ensure continuity of a client service. To be specific, in the method provided in this embodiment of the present invention, the destination information table only needs to record a mapping relationship between identification information of each of a plurality of candidate destinations and corresponding routing information, and does not need to record information about the access client. Therefore, the information recorded in the destination information table does not increase with the growing quantity of access clients, and this avoids a problem of occupying excessive storage resources of the ingress router.

In a possible implementation, before the receiving the first packet sent by the client, the method further includes: receiving a second packet sent by the client, where the second packet includes a traffic identifier, and the traffic identifier includes one or more of the following information: a triplet, a quintuple, a flow label, or a service identifier of the second packet; and selecting one of the N candidate destinations as the target destination based on the traffic identifier.

In this embodiment of the present invention, the client initiates an initial data packet (which may correspond to the second packet) to establish a data flow between the client and a server, where traffic identification information (which may include a service IP address) in the initial data packet points to the server. However, in an edge computing scenario, because a plurality of candidate destinations may share a same service IP address to provide services for the client, the network device (for example, an ingress router) may determine, based on the traffic identification information in the initial data packet, a plurality of candidate destinations corresponding to the information, and then the ingress router selects one of the plurality of candidate destinations as the target destination, so that the client can establish a data flow with the target destination.

In a possible implementation, the method further includes: based on the selected target destination, obtaining the target identification information, and adding the target identification information to the second packet; and sending the second packet that carries the target identification information to the target destination, to trigger the target destination to generate a response packet that carries the target identification information, where the response packet is a response packet for the second packet.

In this embodiment of the present invention, after the network device (for example, the ingress router) determines the target destination, the ingress router may determine the target identification information (for example, the destination selection information), and then write the destination selection information into the initial data packet (which may correspond to the second packet), so that a response data packet (which may correspond to the response packet) generated after the target destination responds to the initial data packet carries the destination selection information, and further, the destination selection information may be notified to the client by using the response data packet. According to the method provided in this embodiment of the present invention, the destination selection information is allocated by the ingress router. Therefore, after receiving the request data packet that carries the destination selection information, the ingress router can identify the target destination based on the destination selection information, to ensure continuity of a client service and improve user experience.

In a possible implementation, the selecting one of the N candidate destinations as the target destination based on the traffic identifier includes: searching a computing power routing table corresponding to the N candidate destinations, and obtaining computing power information of each of the N candidate destinations; and selecting one of the N candidate destinations as the target destination based on the computing power information of each candidate destination, where the computing power information includes one or more of current load status information and network quality information of the corresponding candidate destination.

In this embodiment of the present invention, because the computing routing table records information such as a current load status and network quality of each candidate destination, after determining a plurality of candidate destinations, the network device (for example, the ingress router) can obtain computing information of each candidate destination by searching the computing routing table, and then the ingress router selects a target destination based on the computing information, that is, the ingress router performs load sharing, to implement traffic scheduling based on the computing information of each candidate destination. This avoids a problem that load of the plurality of candidate destinations is unbalanced because the target destination is selected based on an Anycast route, and optimizes client access.

In a possible implementation, the method further includes: receiving a computing route sent by each candidate destination, where the computing route includes the computing information and the routing information of the corresponding candidate destination; and generating the computing routing table, where the computing routing table includes the computing information and the routing information of each candidate destination.

In this embodiment of the present invention, the network device (for example, the ingress router) may receive the computing route (that is, an extended route, where computing information of a candidate destination is added to a conventional route) advertised by each candidate destination, and generate the computing routing table. The computing routing may include but is not limited to the computing information and the routing information of the candidate destination. Because the current load status information of each candidate destination is generated by the candidate destination, the information can better indicate a current computing status of the candidate destination, and the target destination selected by the ingress router based on the information can balance load of each candidate destination.

In a possible implementation, when the computing information further includes identification information of the corresponding candidate destination, the method further includes: generating the destination information table based on the identification information and the corresponding routing information of each candidate destination.

In this embodiment of the present invention, when advertising a computing route, each candidate destination may carry the corresponding identification information. Further, the network device (for example, the ingress router) may generate a destination information table based on the identification information and the corresponding routing information of each candidate destination, that is, the destination information table may record a mapping relationship between identification information of a plurality of candidate destinations and corresponding routing information. When receiving an initial data packet of the client, the ingress router may determine, based on identification information of the target destination, destination selection information, and then write the destination selection information into the initial data packet. When receiving a request data packet of the client, the ingress router may determine, by searching the destination information table, target routing information corresponding to the destination selection information, to ensure continuity of a client service and improve user experience.

In a possible implementation, the method further includes: generating identification information of each candidate destination according to a preset algorithm, and generating the destination information table based on the identification information and the corresponding routing information of each candidate destination.

Because the identification information of the candidate destination is valid only locally on the network device (for example, the ingress router), it is only required that the ingress router can identify the information. In this embodiment of the present invention, the identification information of the candidate destination may be generated by the ingress router according to the preset algorithm, and a mapping relationship between identification information of a plurality of candidate destinations and corresponding routing information may be recorded in the destination information table. When receiving an initial data packet of the client, the ingress router may determine, based on identification information of the target destination, destination selection information, and then write the destination selection information into the initial data packet. When receiving a request data packet of the client, the ingress router may determine, by searching the destination information table, target routing information corresponding to the destination selection information, to ensure continuity of a client service and improve user experience.

In a possible implementation, the method further includes: establishing a temporary session table, where the temporary session table includes a mapping relationship between the traffic identifier of the client and the corresponding target routing information; receiving a pseudo initial packet sent by the client, where the pseudo initial packet includes the traffic identifier; determining, based on the traffic identifier in the pseudo initial packet and the temporary session table, the target routing information corresponding to the traffic identifier in the pseudo initial packet; and sending the pseudo initial packet to the target destination based on the target routing information, to trigger the target destination to process the pseudo initial packet.

At an initial stage of establishing a data flow between the client and the server, that is, when the client does not receive a response data packet that carries destination selection information, the client may send a plurality of data packets (which are also referred to as pseudo initial packets) to the server. Because these data packets do not carry destination selection information, after receiving these data packets, the ingress router may schedule these data packets to different destinations for response, and this causes a problem such as a client service interruption. In this embodiment of the present invention, the ingress router establishes the temporary session table to record the mapping relationship between the traffic identifier of the client and target routing information. When receiving a pseudo initial packet, the ingress router determines, by searching the temporary session table, target routing information corresponding to the traffic identifier in the pseudo initial packet, and sends the pseudo initial packet to the target destination based on the target routing information, so that all data packets initiated by a same client are scheduled and forwarded to a same destination for response, to ensure continuity of a client service and improve user experience.

In a possible implementation, the method further includes: establishing a temporary session table, where the temporary session table includes a mapping relationship between the traffic identifier of the client and the target identification information of the corresponding target destination; receiving a pseudo initial packet sent by the client, where the pseudo initial packet includes the traffic identifier; determining, based on the traffic identifier in the pseudo initial packet and the temporary session table, the target identification information corresponding to the traffic identifier in the pseudo initial packet; and determining the target routing information based on the target identification information, and sending the pseudo initial packet to the target destination based on the target routing information, to trigger the target destination to process the pseudo initial packet.

At an initial stage of establishing a data flow between the client and the server, that is, when the client does not receive a response data packet that carries destination selection information, the client may send a plurality of data packets (which are also referred to as pseudo initial packets) to the server. Because these data packets do not carry destination selection information, after receiving these data packets, the ingress router may schedule these data packets to different destinations for response, and this causes a problem such as a client service interruption. In this embodiment of the present invention, the ingress router establishes the temporary session table to record the mapping relationship between the traffic identifier of the client and the target identification information (for example, the destination selection information). When receiving a pseudo initial packet, the ingress router determines, by searching the temporary session table, destination selection information corresponding to the traffic identifier in the pseudo initial packet, determines the target routing information based on the destination selection information, and schedules and sends the pseudo initial packet to the target destination, so that all data packets initiated by a same client are scheduled and forwarded to a same destination for response, to ensure continuity of a client service and improve user experience.

In a possible implementation, the target destination includes one or more of a multi-access edge computing MEC site, a data center, a server, or a service instance, and the network device includes one or more of a user-side network gateway and a user ingress router.

In a possible implementation, when the target destination includes the MEC site or the data center, the target identification information includes selection information of a site of the target destination, or the target identification information includes selection information of a site of the target destination and selection information of a server connected to the destination site.

In a possible implementation, when the target destination includes the server or the service instance, the target identification information includes selection information of the server or selection information of the service instance, or the target identification information includes selection information of the server and selection information of a site connected to the server, or the target identification information includes selection information of the service instance and selection information of a site connected to service implementation.

In a possible implementation, the method further includes: during updating of the target identification information, updating the target identification information that is of the target destination and that is in the destination information table, and updating the target identification information in the first packet.

In this embodiment of the present invention, the identification information of the target destination may be periodically updated (that is, the target identification information may be periodically updated), so that the destination selection information is more secure. Not only client privacy can be protected, but also network security can be improved.

According to a second aspect, an embodiment of the present invention provides a packet processing method, applied to a target destination and including: receiving a first packet that is of a client and that is forwarded by a network device, where the first packet includes target identification information, the target identification information is used to identify the target destination, the target destination is a destination selected from N candidate destinations by the network device for the client, and N is an integer greater than 0; and processing the first packet to generate a first response packet, and sending the first response packet to the client.

In this embodiment of the present invention, after a data flow is established between the client and the target destination, the first packet (for example, a request data packet) initiated by the client is scheduled and forwarded by an ingress router to the target destination based on the target identification information (for example, destination selection information). Further, the target destination receives and processes the request data packet, generates a response data packet, and then sends the response data packet to the client, so that request data packets initiated by a same client are responded to by a same destination, that is, continuity of a client service is ensured, and user experience is improved.

In a possible implementation, before the receiving the first packet that is of the client and that is forwarded by the network device, the method further includes: receiving a second packet that is of the client and that is forwarded by the network device, where the second packet includes the target identification information written by the network device; and processing the second packet to generate a second response packet, and sending the second response packet to the client, where the second response packet includes the target identification information.

In this embodiment of the present invention, when a data flow is established between the client and the target destination, the target destination receives an initial data packet, where the initial data packet carries the destination selection information allocated by the ingress router. Further, the target destination responds to the initial data packet and generates a response data packet, where the response data packet carries the destination selection information. Then the target destination sends the response data packet to the client, to notify the client of the destination selection information, to ensure continuity of a client service and improve user experience.

In a possible implementation, during updating of the target identification information, the first response packet includes updated target identification information.

In this embodiment of the present invention, during updating of the destination selection information, the target destination adds the updated destination selection information to the response data packet, to notify the client that the destination selection information is updated. The destination selection information may be updated periodically, so that the destination selection information is more secure. Not only client privacy can be protected, but also network security can be improved.

According to a third aspect, an embodiment of the present invention provides a packet processing method, applied to a client and including: sending a first packet to a network device, where the first packet includes target identification information, the target identification information is used to identify a target destination, the target destination is a destination selected from N candidate destinations by the network device for the client, and N is an integer greater than 0; and receiving a first response packet sent by the target destination, where the first response packet is a response packet for the first packet.

In this embodiment of the present invention, after a data flow is established between the client and the target destination, a request data packet initiated by the client carries destination selection information, so that an ingress router schedules and forwards, based on the destination selection information, the request data packet to the target destination for response. Further, the client receives a response data packet sent by the target destination, so that request data packets initiated by a same client are responded to by a same destination, that is, continuity of a client service is ensured, and user experience is improved.

In a possible implementation, the method further includes: sending a second packet to the network device; receiving a second response packet sent by the target destination, where the second response packet is a response packet for the second packet, and the second response packet includes the target identification information; and recording the target identification information, to enable the first packet to carry the target identification information.

In this embodiment of the present invention, when a data flow is established between the client and a server, for an initial data packet initiated by the client, the ingress router selects a target destination, and schedules and forwards the initial data packet to the target destination for response, and the client can receive a response data packet sent by the target destination, and record destination selection information in the response data packet, so that the client carries the information when initiating a request data packet again, and the ingress router schedules and forwards, based on the information, the request data packet to the target destination for response. In this way, request data packets initiated by a same client are responded to by a same destination, that is, continuity of a client service is ensured, and user experience is improved.

In a possible implementation, during updating of the target identification information, the first response packet includes updated target identification information, and the method further includes: recording the updated target identification information, to enable the first packet to carry the updated target identification information.

In this embodiment of the present invention, during updating of the destination selection information, the response data packet received by the client carries the updated destination selection information, and the client records the updated destination selection information, so that the updated destination selection information is carried when the client initiates a request data packet again, and the ingress router schedules and forwards, based on the information, the request data packet to the target destination for response. The destination selection information of the target destination may be updated periodically, so that the destination selection information is more secure. Not only client privacy can be protected, but also network security can be improved.

According to a fourth aspect, an embodiment of the present invention provides a packet processing apparatus, used in a first network device. The apparatus includes: a first receiving unit, configured to receive a first packet sent by a client, where the first packet includes target identification information, the target identification information is used to identify a target destination, the target destination is a destination selected from N candidate destinations by the first network device for the client, and N is an integer greater than 0; and a first processing unit, configured to: determine the target destination based on the target identification information, and forward the first packet to the target destination, to trigger the target destination to process the first packet.

In a possible implementation, the first processing unit is specifically configured to: determine, based on a destination information table and the target identification information, target routing information corresponding to the target destination, where the destination information table includes a mapping relationship between identification information of the N candidate destinations and corresponding routing information; and forward the first packet to the target destination based on the target routing information.

In a possible implementation, the apparatus further includes: a second receiving unit, configured to receive a second packet sent by the client, where the second packet includes a traffic identifier, and the traffic identifier includes one or more of the following information: a triplet, a quintuple, a flow label, or a service identifier of the second packet; and a second processing unit, configured to select one of the N candidate destinations as the target destination based on the traffic identifier.

In a possible implementation, the apparatus further includes a third processing unit, configured to: based on the selected target destination, obtain the target identification information, and add the target identification information to the second packet, where the third processing unit is further configured to send the second packet that carries the target identification information to the target destination, to trigger the target destination to generate a response packet that carries the target identification information, where the response packet is a response packet for the second packet.

In a possible implementation, the second processing unit is specifically configured to: search a computing routing table corresponding to the N candidate destinations, and obtain computing information of each of the N candidate destinations; and select one of the N candidate destinations as the target destination based on the computing information of each candidate destination, where the computing information includes one or more of current load status information and network quality information of the corresponding candidate destination.

In a possible implementation, the apparatus further includes: a third receiving unit, configured to receive a computing route sent by each candidate destination, where the computing route includes the computing information and the routing information of the corresponding candidate destination; and a fourth processing unit, configured to generate the computing routing table, where the computing routing table includes the computing information and the routing information of each candidate destination.

In a possible implementation, when the computing information further includes identification information of the corresponding candidate destination, the apparatus further includes a fifth processing unit, configured to generate the destination information table based on the identification information and the corresponding routing information of each candidate destination.

In a possible implementation, the apparatus further includes a sixth processing unit, configured to: generate identification information of each candidate destination according to a preset algorithm, and generate the destination information table based on the identification information and the corresponding routing information of each candidate destination.

In a possible implementation, the apparatus further includes a seventh processing unit, configured to: establish a temporary session table, where the temporary session table includes a mapping relationship between the traffic identifier of the client and the corresponding target routing information; and receive a pseudo initial packet sent by the client, where the pseudo initial packet includes the traffic identifier, where the seventh processing unit is further configured to: determine, based on the traffic identifier in the pseudo initial packet and the temporary session table, the target routing information corresponding to the traffic identifier in the pseudo initial packet; and send the pseudo initial packet to the target destination based on the target routing information, to trigger the target destination to process the pseudo initial packet.

In a possible implementation, the apparatus further includes an eighth processing unit, configured to: establish a temporary session table, where the temporary session table includes a mapping relationship between the traffic identifier of the client and the target identification information of the corresponding target destination; and receive a pseudo initial packet sent by the client, where the pseudo initial packet includes the traffic identifier, where the eighth processing unit is further configured to: determine, based on the traffic identifier in the pseudo initial packet and the temporary session table, the target identification information corresponding to the traffic identifier in the pseudo initial packet; and determine the target routing information based on the target identification information, and send the pseudo initial packet to the target destination based on the target routing information, to trigger the target destination to process the pseudo initial packet.

In a possible implementation, the target destination includes one or more of a multi-access edge computing MEC site, a data center, a server, or a service instance.

In a possible implementation, when the target destination includes the MEC site or the data center, the target identification information includes selection information of a site of the target destination, or the target identification information includes selection information of a site of the target destination and selection information of a server connected to a destination site.

In a possible implementation, when the target destination includes the server or the service instance, the target identification information includes selection information of the server or selection information of the service instance, or the target identification information includes selection information of the server and selection information of a site connected to the server, or the target identification information includes selection information of the service instance and selection information of a site connected to service implementation.

In a possible implementation, the apparatus further includes a first updating unit, configured to: during updating of the target identification information, update the target identification information that is of the target destination and that is in the destination information table, and update the target identification information in the first packet.

According to a fifth aspect, an embodiment of the present invention provides a packet processing apparatus, used in a second network device and including: a first receiving unit, configured to receive a first packet that is of a client and that is forwarded by a first network device, where the first packet includes target identification information, the target identification information is used to identify the second network device, the second network device is a destination selected from N candidate destinations by the first network device for the client, and N is an integer greater than 0; and a first processing unit, configured to: process the first packet to generate a first response packet, and send the first response packet to the client.

In a possible implementation, the apparatus further includes a second processing unit, configured to receive a second packet that is of the client and that is forwarded by the first network device, where the second packet includes the target identification information written by the first network device, where the second processing unit is configured to: process the second packet to generate a second response packet, and send the second response packet to the client, where the second response packet includes the target identification information.

In a possible implementation, during updating of the target identification information, the first response packet includes updated target identification information.

According to a sixth aspect, an embodiment of the present invention provides a packet processing apparatus, used in a client and including: a first sending unit, configured to send a first packet to a first network device, where the first packet includes target identification information, the target identification information is used to identify a target destination, the target destination is a destination selected from N candidate destinations by the first network device for the client, and N is an integer greater than 0; and a first receiving unit, configured to receive a first response packet sent by the target destination, where the first response packet is a response packet for the first packet.

In a possible implementation, the apparatus further includes a second processing unit, configured to: send a second packet to the first network device, and receive a second response packet sent by the target destination, where the second response packet is a response packet for the second packet, and the second response packet includes the target identification information, where the second processing unit is further configured to record the target identification information, to enable the first packet to carry the target identification information.

In a possible implementation, during updating of the target identification information, the first response packet includes updated target identification information, and the apparatus further includes a third processing unit, configured to record the updated target identification information, to enable the first packet to carry the updated target identification information.

According to a seventh aspect, an embodiment of the present invention provides a semiconductor chip. The semiconductor chip may include the packet processing apparatus provided in any implementation of the fourth aspect, the fifth aspect, or the sixth aspect.

According to an eighth aspect, an embodiment of the present invention provides a system-on-a-chip SoC chip. The SoC chip includes the packet processing apparatus provided in any implementation of the fourth aspect, the fifth aspect, or the sixth aspect, and an internal memory and an external memory that are coupled to the packet processing apparatus. The SoC chip may include a chip, or may include a chip and another discrete component.

According to a ninth aspect, an embodiment of the present invention provides a chip system. The chip system includes the packet processing apparatus provided in any implementation of the fourth aspect, the fifth aspect, or the sixth aspect. In a possible design, the chip system further includes a memory, and the memory is configured to store program instructions and data that are necessary for or related to the packet processing apparatus in a running process. The chip system may include a chip, or may include a chip and another discrete component.

According to a tenth aspect, an embodiment of the present invention provides a host. The host includes a processor, and the processor is configured to perform the packet processing method provided in any implementation of the first aspect, the second aspect, or the third aspect. The host may further include a memory. The memory is configured to be coupled to the processor, and stores program instructions and data that are necessary for the host. The host may further include a communication interface, configured for communication between the host and another device or a communication network.

According to an eleventh aspect, an embodiment of the present invention provides a switch. The switch includes a processor, and the processor is configured to perform the packet processing method provided in any implementation of the first aspect, the second aspect, or the third aspect. The switch may further include a memory. The memory is configured to be coupled to the processor, and stores program instructions and data that are necessary for the switch. The switch may further include a communication interface, configured for communication between the switch and another device or a communication network.

According to a twelfth aspect, an embodiment of the present invention provides a computer program. The computer program includes instructions, and when the computer program is executed by a multi-core processor, a host is enabled to perform the processing method procedure of the multi-core processor according to any one of the first aspect, the second aspect, or the third aspect.

According to a thirteenth aspect, an embodiment of the present invention provides a computer-readable storage medium. The computer-readable storage medium stores a computer program, and when the computer program is executed by a host, the processing method procedure of the multi-core processor according to any one of the first aspect, the second aspect, or the third aspect is implemented.

According to a fourteenth aspect, an embodiment of the present invention provides a computer non-transitory storage medium, including instructions. When the instructions are run on an intermediate node, the intermediate node is enabled to perform the method according to any one of the first aspect, the second aspect, or the third aspect.

### BRIEF DESCRIPTION OF DRAWINGS

FIG. 1A is a schematic diagram of a scenario of switching an access network and using a multipath according to a conventional technology;
FIG. 1B is a diagram of a principle of a compute first networking according to an embodiment of the present invention;
FIG. 2 is a diagram of an architecture of an edge computing-based network according to an embodiment of the present invention;
FIG. 3A is a schematic flowchart of a packet processing method according to an embodiment of this application;
FIG. 3B is a schematic flowchart of a specific application scenario of a packet processing method according to an embodiment of the present invention;
FIG. 4A is a schematic flowchart of another packet processing method according to an embodiment of this application;
FIG. 4B is a schematic flowchart of generating a computing routing table according to an embodiment of the present invention;
FIG. 4C is a schematic flowchart of processing an initial data packet by an ingress router according to an embodiment of the present invention;
FIG. 4D is a schematic diagram of two extended data packet formats according to an embodiment of the present invention;
FIG. 4E is a schematic flowchart of generating a destination information table according to an embodiment of the present invention;
FIG. 4F is a schematic flowchart of announcing a site identifier by using an extended routing protocol according to an embodiment of the present invention;
FIG. 4G is another schematic flowchart of generating a destination information table according to an embodiment of the present invention;
FIG. 4H is a schematic flowchart of generating a site identifier by an ingress router according to an embodiment of the present invention;
FIG. 5A is a flowchart of a TCP data flow-based packet processing method according to an embodiment of the present invention;
FIG. 5B is a flowchart of a QUIC data flow-based packet processing method according to an embodiment of the present invention;
FIG. 5C is a schematic flowchart of a packet processing method with a pseudo initial packet according to an embodiment of the present invention;
FIG. 5D is a schematic diagram of a temporary session table according to an embodiment of the present invention;
FIG. 6A is a first schematic apparatus diagram of a session affinity apparatus according to an embodiment of the present invention;
FIG. 6B is a second schematic apparatus diagram of a session affinity apparatus according to an embodiment of the present invention;
FIG. 6C is a third schematic apparatus diagram of a session affinity apparatus according to an embodiment of the present invention; and
FIG. 7 is a schematic diagram of a hardware structure of a network device according to an embodiment of the present invention.

### DESCRIPTION OF EMBODIMENTS

The following describes embodiments of the present invention with reference to the accompanying drawings in embodiments of the present invention.

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"An embodiment" mentioned in this specification means that a particular feature, structure, or characteristic described with reference to the embodiment may be included in at least one embodiment of this application. The phrase shown in various locations in the specification does not necessarily refer to a same embodiment, and is not an independent or optional embodiment exclusive from another embodiment. It is explicitly and implicitly understood by a person skilled in the art that embodiments described in the specification may be combined with another embodiment.

First, a technical problem to be specifically resolved in this application is analyzed and proposed. In an internet application, a plurality of requests from a client to a server may be associated, and are usually allocated to a same server for processing, to avoid a cache failure and implement session affinity. If the requests are not allocated to the same server, the following cases occur: A login page is repeatedly displayed, an item placed in a shopping cart by the client is lost, a verification error is prompted, and so on. In a conventional technology, a common session affinity method includes the following solution 1 and solution 2.

The solution 1 is a stateful session affinity technology. The technology may be based on an edge computing network. To be specific, the network includes a plurality of MEC sites that process a request for a user. For the user, service IP addresses of these MEC sites are the same (that is, for the user, these MEC sites share the same IP address), but for the network, IP addresses used by the MEC sites inside the network are different. When the client initiates a new request, one of the plurality of MEC sites may be selected as a target MEC site. Then, an ingress router schedules a request data packet of the client to the target MEC site for response, and records current session information in a session table. The session information may include user information and corresponding routing information, for example, a quintuple (a source IP address, a destination IP address, a protocol number, a source port, and a destination port) and an SRv6 tunnel (that is, a tunnel to the target MEC site), or a quintuple and a next-hop address (that is, an IP address used inside the network of the target MEC site). When the client initiates a request again, the ingress router may query the session table for the corresponding routing information based on the user information, to send a request data packet to the destination site for response.

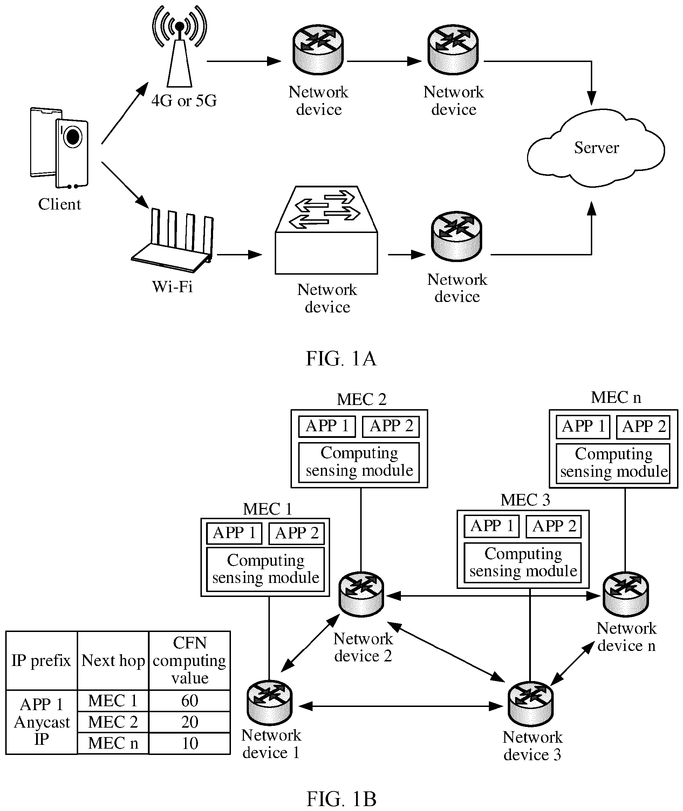

In the solution 1, based on the foregoing stateful session affinity technology of the edge computing network, although session affinity can be implemented theoretically, the following disadvantages exist.
1. Excessive network device resources are occupied. For example, if 1000 users access the network, information about 1000 flows is generated, and then the network device records information about each flow, that is, the network device needs to record user information of the 1000 users and corresponding routing information. With a growing quantity of access users, excessive storage resources are occupied, and it is more difficult for the network device to maintain each flow.
2. A service interruption may occur. In the stateful session affinity technology, the request data packet initiated by the client needs to include stable and reliable information that can be used to identify a flow to which the data packet belongs. For TCP and UDP flows, data packets that belong to a same flow have same quintuple content. That is, a quintuple can be used to identify the flow. However, for the QUIC flow, because the QUIC has a feature of switching a network to maintain a connection, content of a quintuple and a QUIC connection ID of data packets that belong to a same flow may change. Therefore, there is no stable and reliable field in the data packet to identify a flow to which the data packet belongs. As a result, the network device cannot find, based on user information, a destination site in a session table, and a service interruption occurs. For example, FIG. 1A is a schematic diagram of a scenario of switching an access network and using a multipath according to a conventional technology. In the figure, a network of a user may be frequently switched. For example, when the user goes out from an office or home, Wi-Fi is disconnected, the network is switched to a 4G or 5G network, or a multi-path network (for example, an SD-WAN scenario or a Wi-Fi plus mobile traffic scenario) is used. According to the TCP or the UDP protocol, a source IP address of the client changes after the network is switched, and a previous connection is not maintained. In other words, a new flow is established after network switching. However, based on the QUIC protocol, a connection identification method different from that of the TCP may be built in, so that a previous connection to the server can be restored after network switching is completed. That is, data packets that belong to a same flow may have different quintuples or different QUIC connection IDs. Therefore, for the QUIC flow, there is no stable and reliable field in the data packet to identify a data flow to which the data packet belongs. As a result, the network device cannot find, based on the user information, a corresponding destination site in the session table, and a user service is interrupted, that is, session affinity cannot be implemented in a manner of the session table.

The solution 2 is a stateless session affinity technology. In this technology, the network device does not need to record the foregoing session table. When the client initiates a new request, the client schedules, based on an Anycast route (for example, a proximity principle), a request data packet to a nearest target MEC site for response. It should be noted that in this technology, the target MEC site is selected by a routing system instead of an ingress router. To be specific, when the ingress router receives the request data packet, the target MEC site cannot be directly determined, but is determined by the router system in a request data packet forwarding process according to a routing protocol. After a response data packet is generated, that is, the target MEC site is determined, an egress router inserts a local identifier (that is, an IP address used inside the network) of the target MEC site into the data packet. When the client initiates a request again subsequently, the request data packet carries the identifier. Further, when the ingress router receives a request data packet of the client again, if the ingress router identifies that the data packet carries an identifier, the ingress router forwards the request data packet to a destination site specified by the identifier for response.

In the solution 2, although excessive user information and routing information do not need to be stored, that is, excessive resources of the network device are not occupied, and session affinity can be implemented, the following disadvantages exist.
1. Load balancing cannot be implemented by the MEC site. According to the foregoing stateless session affinity technology, because the nearest MEC site is selected based on an Anycast route to process the request data packet, the load balancing cannot be implemented by the MEC site.
2. A security risk exists. According to the foregoing stateless session affinity technology, an egress network device may insert a local identifier of the target MEC site (that is, an IP address used inside the network) into the data packet. Because the local identifier of the target MEC site belongs to internal information of the network, exposing the information to the client brings a security risk to the network.
3. The site identifier needs to be synchronized on the entire network. According to the foregoing stateless session affinity technology, because an ingress router cannot directly determine the target MEC site, the ingress router cannot allocate the site identifier. Further, after the request data packet is responded to by one MEC site, it indicates that the target MEC site is determined. In this case, the egress router inserts the site identifier of the target MEC site into a response data packet (that is, the site identifier is allocated by the egress network device). Therefore, the egress router needs to synchronize all identification information on the entire network, so that the ingress router subsequently forwards, based on the identifier carried in the request data packet, the data packet to the corresponding target MEC site for response.

In conclusion, in the existing stateful session affinity method, the excessive resources of the network device are occupied, and the service is interrupted. In the existing stateless session affinity method, due to load imbalance at the MEC site, a response speed is reduced, and user experience is poor. Therefore, a packet processing method provided in this application is used to resolve the foregoing technical problems.

The following describes embodiments of the present invention with reference to the accompanying drawings in embodiments of the present invention.

For ease of understanding of embodiments of the present invention, the following describes a compute first networking (Compute First Networking, CFN) on which embodiments of the present invention are based. FIG. 1B is a diagram of a principle of a compute first networking according to an embodiment of the present invention. In an edge computing scenario in the figure, the compute first networking includes n multi-access edge computing (Multi-access Edge Computing, MEC) sites that provide a service for a client. For the client, service IP addresses of these MEC sites are the same (that is, for the client, these MEC sites share a same IP address), but for the network, IP addresses used by these MEC sites inside the network are different. The MEC site is a physical extension of a cloud data center to a final client, and is also referred to as offloading of a cloud computing capability. In the CFN, a better site can be selected to provide services for the client based on a computing status of each site, to shorten time for processing a client request, and improve client experience. It should be noted that the computing status includes but is not limited to current CPU, memory, and disk utilization of a server in the MEC site, an FPGA/GPU heterogeneous computing capability, and the like, and a site with low resource utilization or low current load is usually considered as a better site. Details are as follows:

In a computing status synchronization phase, the MEC site may notify a network device of the computing status of the MEC site by using a routing protocol. Specifically, each MEC site in the CFN collects a computing status of each MEC site by using a computing sensing module, and notifies each network device of the computing status by using an edge computing node, so that the computing status is spread and synchronized in the network. Finally, all network devices can sense the computing status of each MEC site. Further, a computing load sharing table is generated on the network device. The computing load sharing table records a computing value of each MEC site, next-hop information (which actually corresponds to a tunnel to the MEC site or an IP address used inside the network), and an Anycast IP (that is, service IP addresses of these MEC sites).

It should be noted that, because a server of an application is deployed at each MEC site, a cloud computing capability may be offloaded to the MEC site (for example, the MEC site may be deployed in a scenario such as a factory, a campus, or a port). The MEC site and the network device are separated, and the network device and the MEC site are connected by using a gateway (for example, a router, a switch, or a UPF). The network device can obtain the computing status (for example, CPU utilization) of each site. Each MEC site may include a plurality of devices, such as a server, a router, a switch, and a UPF. In addition, the network in which the network device is located may be a mobile bearer network, a fixed network, or a metropolitan area network, which is not limited herein.

In an MEC site selection phase, the network device calculates the currently better MEC site based on the foregoing computing load sharing table. Specifically, the client initiates an application request, and the network device queries the computing load sharing table, to obtain computing information and a network status of an application at each site, so that an ingress router accessed by the client may obtain the currently better MEC site through calculation, and schedule the request of the client to the MEC site, to optimize client access.

Therefore, by using the compute first networking, the client request can be scheduled to a site with a currently best computing status, to implement optimal client experience, optimal resource utilization, and optimal network efficiency of a service.

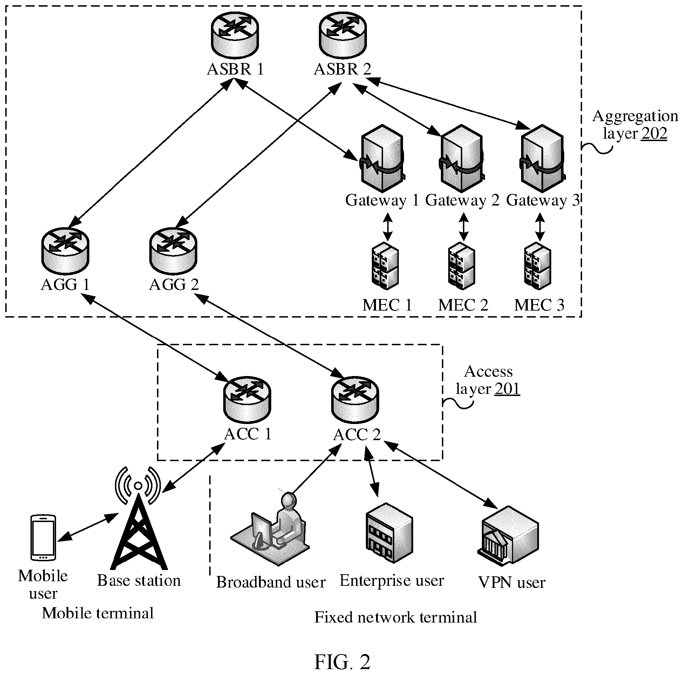

Based on the foregoing technical problem and the compute first networking, for ease of understanding of embodiments of the present invention, the following first describes a network architecture on which embodiments of the present invention are based. FIG. 2 is a diagram of an architecture of an edge computing-based network according to an embodiment of the present invention. In the figure, the network architecture may include an access layer 201, an aggregation layer 202, and a plurality of terminals. The access layer 201 includes at least one access layer router (Access layer router, ACC). The aggregation layer 202 includes at least one aggregation layer router (Aggregation layer router, Agg), an autonomous system boundary router (Autonomous System Boundary Router, ASBR), a plurality of multi-access edge computing (Multi-access Edge Computing, MEC) sites, and a gateway corresponding to each MEC site. The plurality of terminals include at least one mobile terminal or at least one fixed network terminal. Details are as follows:

The access layer 201 is configured to provide a user with a capability of accessing an application system in a local network segment. The access layer 201 mainly addresses requirements of mutual access between adjacent users, and provides sufficient bandwidth for the access. In addition, the access layer 201 is further responsible for a user management function (such as address authentication, user authentication, and accounting management) and user information collection. For example, in this embodiment of the present invention, when a terminal initiates a new request, the access layer router at the access layer 201 may select, based on computing statuses (that is, current load of the MEC sites) of a plurality of MEC sites at the aggregation layer 202, one MEC site as a target destination, so that a client establishes a data flow with the target destination. When the terminal initiates a request again, the access layer router identifies destination selection information in a request data packet, and then schedules and forwards the request data packet to a target destination corresponding to the destination selection information for response, to implement session affinity, that is, requests initiated by the terminal are responded to by the same MEC site.

The aggregation layer 202 is configured to connect the access layer 201 and a core layer. The aggregation layer 202 provides data aggregation, transmission, management, and distribution processing for the access layer 201. In addition, the aggregation layer 202 provides policy connection, such as address combination, protocol filtering, and routing service authentication and management, for the access layer 201. The aggregation layer 202 may prevent, through network segment division (for example, a VLAN) and network isolation, a problem of some network segments from spreading to and affecting the core layer, and the aggregation layer 202 may provide interconnection between the access layer 201 and a virtual network, and control and limit access of the access layer 201 to the core layer, to ensure security and stability of the core layer. To implement edge computing, the aggregation layer 202 includes the plurality of MEC sites. These MEC sites can provide a cloud computing function and an IT service environment at a network edge. The environment is characterized by an ultra-low latency, high bandwidth, and real-time access to wireless network information that can be used by an application program. For example, in this embodiment of the present invention, after receiving a request data packet sent by the access layer router at the access layer 201, the aggregation layer router may forward the request data packet to the autonomous system boundary router, then the autonomous system boundary router sends the request data packet to a gateway of a target destination (for example, a target MEC site) corresponding to destination selection information, and then the gateway sends the request data packet to the target MEC site for response.

The terminal is configured to provide a voice and/or data connectivity service for a user. The terminal may include a mobile terminal used by a mobile user, or a fixed network terminal used by a fixed network user (for example, a terminal used by a broadband user, an enterprise user, or a VPN user). The terminal may have different names, for example, user equipment (user equipment, UE), an access terminal, a terminal unit, a terminal station, a mobile station, a mobile console, a remote station, a remote terminal, a mobile device, a wireless communication device, vehicle user equipment, a terminal agent, or a terminal apparatus. Optionally, the terminal may be any type of handheld device, vehicle-mounted device, wearable device, or computer that has a communication function. This is not limited in this embodiment of this application. For example, the handheld device may be a smartphone, the vehicle-mounted device may be a vehicle-mounted navigation system, the wearable device may be a smart band, and the computer may be a personal digital assistant (personal digital assistant, PDA) computer, a tablet computer, or a laptop computer (laptop computer). For example, in this embodiment of the present invention, after the terminal (which is also referred to as the client) receives the destination selection information that is of the target MEC site and that is allocated by the network, a request data packet initiated by the terminal again carries the information, so that the ingress router identifies the target MEC site.

It may be understood that, the foregoing network architecture is merely several examples of implementations in embodiments of the present invention, and the network architecture in embodiments of the present invention includes but is not limited to the foregoing network architecture.

The following describes a specific method architecture on which this embodiment of the present invention is based.

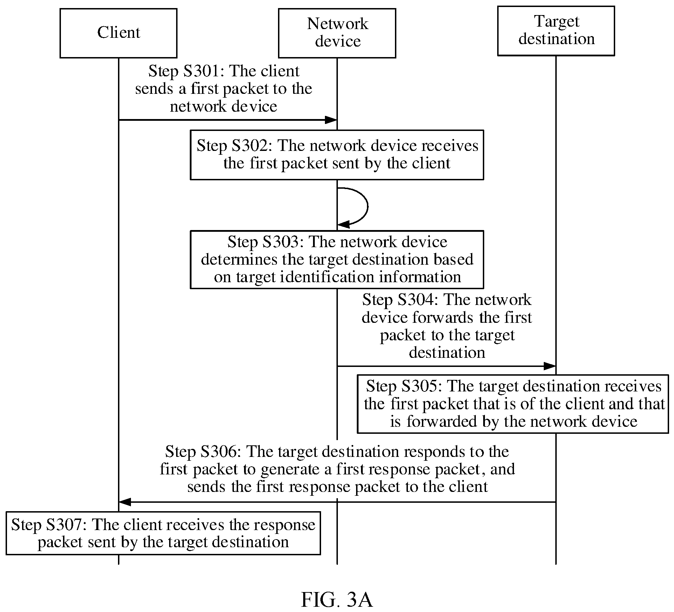

FIG. 3A is a schematic flowchart of a packet processing method according to an embodiment of this application. The following describes the packet processing method in this embodiment of this application from an interaction side of a network device, a target destination, and a client with reference to FIG. 3A and based on the network architecture in FIG. 2. The method includes but is not limited to the following steps.

Step S301: The client sends a first packet to the network device.

Specifically, the first packet may be referred to as a request data packet, and may be understood as a data packet initiated by the client after the client receives target identification information (for example, destination selection information) allocated by a network, or may be understood as a data packet initiated by the client after the client establishes a data flow with the target destination. The first packet includes the target identification information, the target identification information is used to identify the target destination, the target destination is a destination selected from N candidate destinations by the network device for the client, and N is an integer greater than 0. The client is a device that sends a service processing request to a server, and may be a user terminal, such as a mobile phone or a personal computer (Personal Computer, PC), or may be a router, a switch, or the like. It may be understood that the target destination serves as the server and provides a service for the client, and the network device (for example, an ingress router) may provide a data packet forwarding function. For example, the target destination may be one of the plurality of MEC sites in FIG. 2, and may also be referred to as a target MEC site.

In a possible implementation, the target destination includes one or more of a multi-access edge computing MEC site, a data center, a server, or a service instance, and the network device includes one or more of a user-side network gateway and a user ingress router.

Step S302: The network device receives the first packet sent by the client.

Specifically, the first packet includes the target identification information, the target identification information is used to identify the target destination, the target destination is the destination selected by the network device for the client from the N candidate destinations, and N is an integer greater than 0.

In a possible implementation, when the target destination includes the MEC site or the data center, the target identification information includes selection information of a site of the target destination, or the target identification information includes selection information of a site of the target destination and selection information of a server connected to a destination site.

In a possible implementation, when the target destination includes the server or the service instance, the target identification information includes selection information of the server or selection information of the service instance, or the target identification information includes selection information of the server and selection information of a site connected to the server, or the target identification information includes selection information of the service instance and selection information of a site connected to service implementation.

Step S303: The network device determines the target destination based on the target identification information.

Specifically, because the destination selection information (that is, the target identification information) is allocated by the network, the network device (for example, the ingress router) can identify, based on the destination selection information in the request data packet (that is, the first packet), the target destination corresponding to the information. For example, the ingress router may directly determine the target routing information based on the destination selection information, and does not need to search a destination information table in the process.

In a possible implementation, that the network device determines the target destination based on the target identification information, and forwards the first packet to the target destination includes: The network device determines, based on the destination information table and the target identification information, the target routing information corresponding to the target destination, where the destination information table includes a mapping relationship between identification information of the N candidate destinations and corresponding routing information. The network device forwards the first packet to the target destination based on the target routing information. Specifically, after receiving the request data packet initiated by the client, the ingress router (that is, the network device) does not search a session table based on client information to determine the target routing information of the target destination, but identifies the destination selection information (that is, the target identification information) carried in the request data packet. The ingress router queries the destination information table, to determine the target routing information corresponding to the destination selection information, and then sends the request data packet to the target destination based on the target routing information, so that the target destination processes the request data packet, to ensure continuity of a client service.

It should be noted that the routing information may be understood as information about reaching a destination, and the target routing information indicates information about reaching the target destination. For example, the routing information may be a gateway IP address of a tunnel end of the MEC site, or a tunnel such as SRv6 Policy or SR-MPLS Policy, or an index or an ID of the tunnel.

Optionally, after receiving the request data packet initiated by the client, the ingress router identifies the destination selection information in the request data packet, further directly determines the target routing information based on the destination selection information, and then schedules and forwards, based on the target routing information, the request data packet to the target destination for processing.

Step S304: The network device forwards the first packet to the target destination.

Specifically, after the ingress router obtains, based on the destination selection information (for example, an identifier of the target MEC site), the target routing information corresponding to the target MEC site, the ingress router schedules and forwards the request data packet to the target MEC site, so that the target MEC site responds to the request data packet of the client.

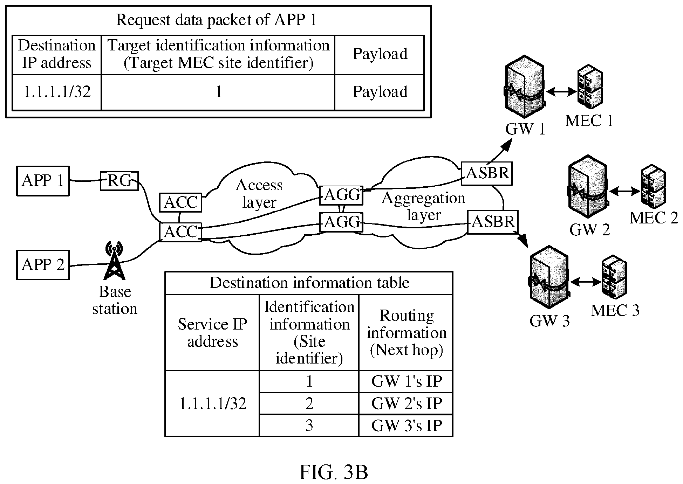

For example, FIG. 3B is a schematic flowchart of a specific application scenario of a packet processing method according to an embodiment of the present invention. In the figure, client 1 is a residential user, and a data flow is established between client 1 and MEC 1. When an application (Application, App) in client 1 initiates a request data packet, a destination IP address carried in the request data packet is 1.1.1.1/32, and an identifier of a target MEC site (which corresponds to the target identification information) is "1". In addition, the request data packet may further include payload (Payload), that is, the load information is actual information to be transmitted during data transmission. Optionally, the request data packet of client 1 may be sent to an ingress router (Access layer router, ACC) through a residential gateway (Residential Gateway, RG). Further, the ingress router receives the request data packet, and identifies that the identifier of the target MEC site in the request data packet is "1". Then, the ingress router searches a destination information table for target routing information "GW 1's IP" corresponding to "1", and forwards the request data packet to "GW 1's IP", so that MEC 1 responds to the request data packet of client 1. Similarly, a request data packet initiated by client 2 may also be forwarded by the ingress router to MEC 3 by using the same method for response. Details are not described herein again.

Step S305: The target destination receives the first packet that is of the client and that is forwarded by the network device.

Specifically, the target destination may serve as a server to receive the request data packet forwarded by the ingress router.

Step S306: The target destination responds to the first packet to generate a first response packet, and sends the first response packet to the client.

Specifically, the first response packet is a response data packet for the first packet (that is, the request data packet), that is, a data packet generated by the target destination for response after the target destination receives the request data packet of the client. The target destination sends the response data packet to the client, to ensure continuity of a client service. Optionally, the target destination may send a second response data packet to the client through an application layer API.

It should be noted that, because the client has recorded the target identification information (for example, the identifier of the target MEC site), the first response packet may not need to carry the identifier of the target MEC site, or the first response packet may carry the identifier of the target MEC site. Optionally, the target MEC site may further indicate the client to cut off a connection, and add a site identifier of another site to the notification packet, to recommend the client to a site in a better status.

Step S307: The client receives the response packet sent by the target destination.

Specifically, the response packet is the response data packet for the first packet. When the client receives the response data packet sent by the target destination, it indicates that the request of the client has been responded to at the target destination, and session affinity is implemented.

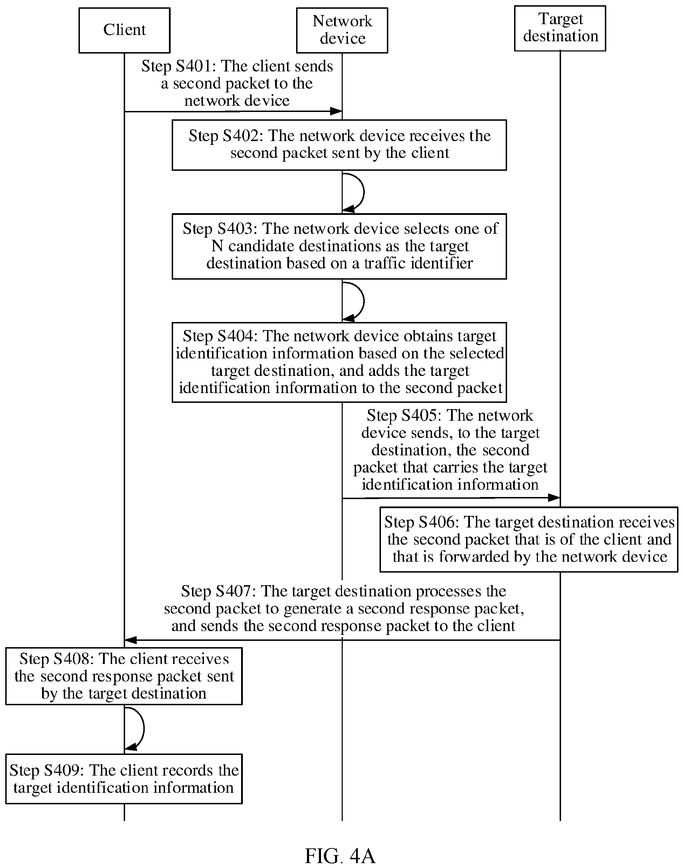

FIG. 4A is a schematic flowchart of another packet processing method according to an embodiment of this application. The following describes the packet processing method in this embodiment of this application from an interaction side of a network device, a target destination, and a client with reference to FIG. 4A and based on the network architecture in FIG. 2. The method includes but is not limited to the following steps.

Step S401: The client sends a second packet to the network device.

Specifically, before the client sends the first packet, the client needs to send the second packet first. The second packet may be understood as an initial data packet, and the initial data packet (that is, an initial packet) may be understood as a handshake signal used when the client establishes a data flow with a server. The second packet includes a traffic identifier, and the traffic identifier includes one or more of the following information: a triplet, a quintuple, a flow label, or a service identifier of the second packet. The triplet may include information about a source IP address, a destination IP address, and a transport layer protocol number. The quintuple may include information about a source IP address, a destination IP address, a transport layer protocol number, a source port number, and a destination port number. It should be noted that the destination IP address may be understood as a service IP address of the server, that is, the destination IP address may point to a plurality of candidate destinations. For example, when the client establishes the data flow with the server based on the TCP protocol, the initial data packet sent by the client to an ingress router includes a synchronization sequence number (Synchronization Sequence Number, SYN), so that a new data flow is established between the server and the client.

Step S402: The network device receives the second packet sent by the client.

The second packet includes the traffic identifier, and the traffic identifier includes one or more of the following information: the triplet, the quintuple, the flow label, or the service identifier of the second packet. The triplet may include the information about the source IP address, the destination IP address, and the transport layer protocol number. The quintuple may include the information about the source IP address, the destination IP address, the transport layer protocol number, the source port number, and the destination port number. It should be noted that the destination IP address may be understood as the service IP address of the server, that is, the destination IP address may point to the plurality of candidate destinations. Because the client cannot directly send the second packet (that is, the initial packet) to the server, the ingress router may forward the initial data packet of the client to the server, to indicate the server to establish a data flow.

Step S403: The network device selects one of N candidate destinations as the target destination based on the traffic identifier.

Specifically, the client initiates the initial data packet to establish the data flow with the server. However, traffic identification information (for example, the service IP address) in the initial data packet points to the plurality of candidate destinations. Therefore, the ingress router may select one of the plurality of candidate destinations as the target destination, to provide a service for the client.

In a possible implementation, that the network device selects one of the N candidate destinations as the target destination based on the traffic identifier includes: The network device searches a computing routing table corresponding to the N candidate destinations, and obtains computing information of each of the N candidate destinations; and selects one of the N candidate destinations as the target destination based on the computing information of each candidate destination, where the computing information includes one or more of current load status information and network quality information of the corresponding candidate destination. Specifically, because the computing routing table records information such as a current load status and network quality of each candidate destination, after determining the plurality of candidate destinations, the ingress router can obtain the computing information of each candidate destination by searching the computing routing table, and then the ingress router selects the target destination based on the computing information, that is, the ingress router performs load sharing, to implement traffic scheduling based on the computing information of each candidate destination. This avoids a problem that load of the plurality of candidate destinations is unbalanced because the target destination is selected based on an Anycast route, and optimizes client access.

In a possible implementation, the method further includes: The network device receives a computing route sent by each candidate destination, where the computing route includes the computing information and routing information of the corresponding candidate destination. The network device generates the computing routing table, where the computing routing table includes the computing information and the routing information of each candidate destination. Specifically, the ingress router may receive the computing route (that is, an extended route, where computing information of a candidate destination is added to the route) advertised by each candidate destination, and generate the computing routing table. The computing routing may include but is not limited to the computing information and the routing information of the candidate destination. Because the current load status information of each candidate destination is generated by the candidate destination, the information can better indicate a current computing status of the candidate destination, and the target destination selected by the ingress router based on the information can balance load of each candidate destination.

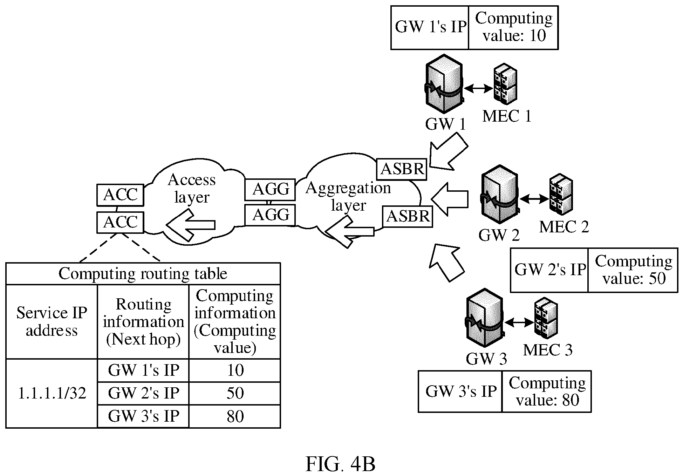

For example, the plurality of candidate destinations are a plurality of candidate MEC sites, the target destination is a target MEC site, and the network device is an ingress router. FIG. 4B is a schematic flowchart of generating a computing routing table according to an embodiment of the present invention. In the figure, a same service IP address (1.1.1.1/32) corresponds to three MEC sites: MEC 1, MEC 2, and MEC 3. Computing information (for example, a computing value) of each MEC site may indicate CPU, memory, and disk utilization of the current MEC site, an FPGA/GPU heterogeneous computing capability, and the like. To be specific, a larger computing value indicates more tasks run at the current MEC site, and a smaller computing value indicates fewer tasks run at the current MEC site. The ingress router generates the computing routing table by receiving the computing information sent by each MEC site. Therefore, when receiving the initial data packet sent by the client, the ingress router may select, for the client based on the computing routing table, an MEC site with a low computing value as the target MEC site, that is, may select MEC 1 as the target MEC site, so that load of the MEC sites is balanced.

Step S404: The network device obtains target identification information based on the selected target destination, and adds the target identification information to the second packet.

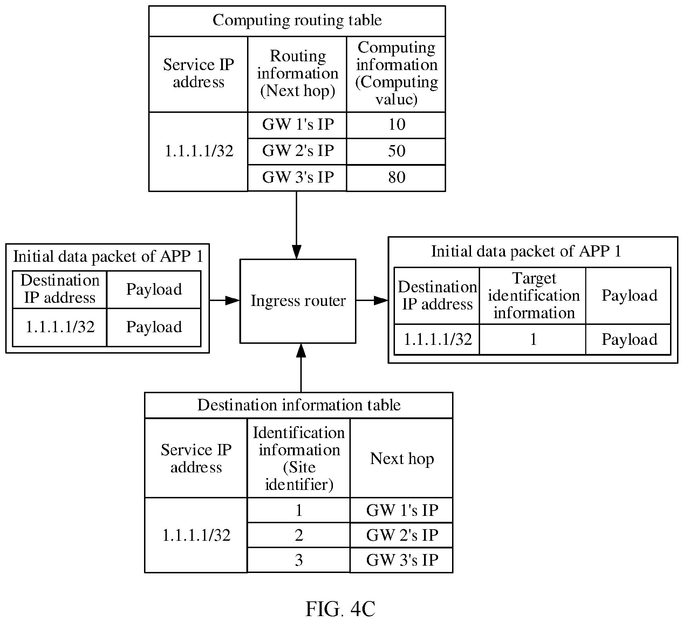

Specifically, after the ingress router determines the target destination, the ingress router may determine destination selection information, and then write the destination selection information into the initial data packet, so that a response data packet generated after the target destination processes the initial data packet carries the destination selection information. For example, FIG. 4C is a schematic flowchart of processing an initial data packet by an ingress router according to an embodiment of the present invention. In the figure, after receiving an initial data packet initiated by client 1, the ingress router selects, based on computing information in a computing routing table, MEC 1 as a target MEC site, then determines, based on a destination information table, that a site identifier corresponding to the MEC site is "1", and writes the site identifier " 1" into the initial data packet.

It should be noted that, if the initial data packet does not carry an extension header, the ingress router may add an extension header (through encapsulation or insertion), and write the destination selection information (that is, the target identification information) into the extension header; or if the initial data packet carries an extension header, the ingress router writes the destination selection information into the extension header. A location that may carry the extension header in the data packet includes but is not limited to APN TLV, HBH option, DOH option, SRH TLV and QUIC Connection ID.

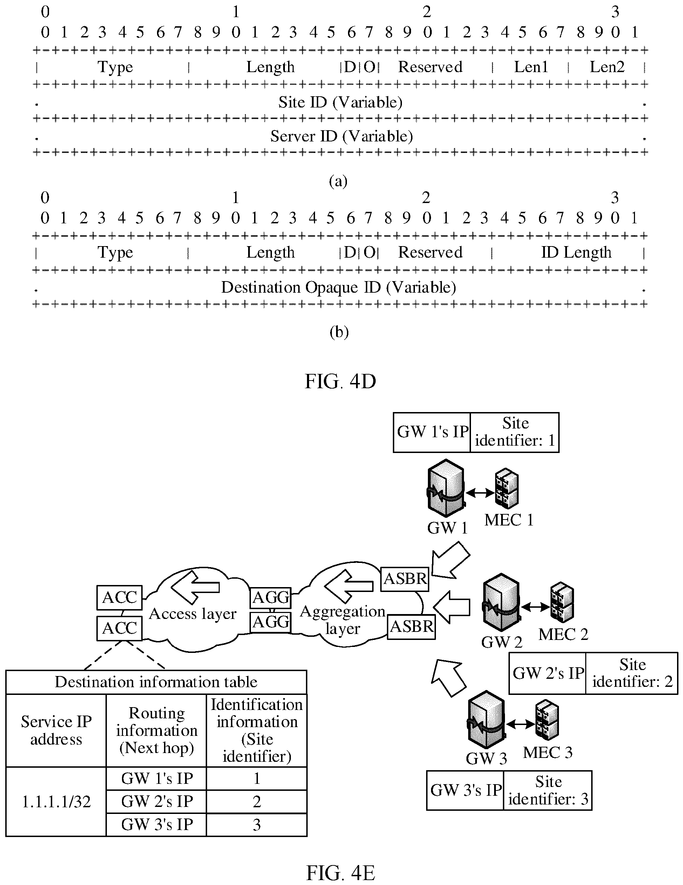

Optionally, a type length value (Type Length Value, TLV) is extended in a data packet format. The TLV may be understood as the extension header, so that application traffic can carry the destination selection information (that is, the identifier of the target MEC site). For example, the first packet, the second packet, the first response packet, and the second response packet may all carry the TLV. It should be noted that the TLV may be carried in IPv6 HBH, IPv6 DOH, SRH TLV, APN6 Service-Status Option, or another location in the data packet. For example, FIG. 4D is a schematic diagram of two extended data packet formats according to an embodiment of the present invention. In the TLV, Type indicates a type of the TLV. When the TLV is used for HBH and DOH according to a requirement of RFC 8200 & IANA, a Type value may be 0x33 (51). When the TLV is used for SRH TLV according to a requirement of RFC 8754 & IANA, a Type value may be 0x88 (136). When the TLV is used for APN Option according to a requirement of an APN-based application status awareness solution, a Type value may be 0x000008 (8). Length indicates a length of the TLV and is in a unit of one byte. When D-flag is set, it indicates that target MEC site selection is not completed, and the ingress router needs to perform the site selection. When D-flag is 0, it indicates that the target MEC site is determined. When O-flag is 0, it indicates that an opaque identifier is not used, that is, the client and all network devices in the network can identify a length of the target MEC site identifier (Site ID), a length of a server identifier (Server ID), and values of the two identifiers. As shown in (a) in FIG. 4D, Len1 indicates the length of Site ID and is in a unit of four bytes, and Len2 indicates the length of Server ID and is in a unit of four bytes. When O-flag is set, it indicates that an opaque identifier (Opaque ID) is used, that is, the identifier can be identified only by an entity inside the network. As shown in (b) in FIG. 4D, ID Length in the figure indicates a length of Opaque ID and is in a unit of four bytes. Because an ID part is the whole, and an ID Length part is also the whole, the length of Site ID cannot be identified outside the network (that is, for the client, Opaque ID may be a string of invalid information with garbled characters, so that the target MEC site identifier is encrypted). For example, Opaque ID may be a value obtained after the target MEC site identifier is encrypted according to a hash algorithm. When the opaque identifier is used, because the MEC site and the client are unaware of the target MEC site identifier, implementation and deployment are accelerated. In addition, because Opaque ID is invalid information for the client, security and privacy of the MEC site and network infrastructure are enhanced, and privacy of the client is protected. Therefore, implementation of standardization and an open-source ecosystem is easily promoted.

In a possible implementation, when the computing information further includes identification information of the corresponding candidate destination, the method further includes: The network device generates the destination information table based on the identification information and the corresponding routing information of each candidate destination. Specifically, when advertising a computing route, each candidate destination may carry the corresponding identification information. Further, the ingress router may generate the destination information table based on the identification information and the corresponding routing information of each candidate destination, that is, the destination information table may record a mapping relationship between identification information of the plurality of candidate destinations and corresponding routing information. When receiving the initial data packet of the client, the ingress router may determine, based on identification information of the target destination, the destination selection information, and then write the destination selection information into the initial data packet. When receiving a request data packet of the client, the ingress router may determine, by searching the destination information table, target routing information corresponding to the destination selection information, to ensure continuity of a client service and improve user experience. For example, FIG. 4E is a schematic flowchart of generating a destination information table according to an embodiment of the present invention. In the figure, an ingress router (ACC) receives a site identifier and corresponding routing information that are sent by each of MEC 1, MEC 2, and MEC 3, generates a destination information table, and records the site identifier and the corresponding routing information of each site. To be specific, "1" corresponds to "GW 1's IP", "2" corresponds to "GW 2's IP", and "3" corresponds to "GW 3's IP".

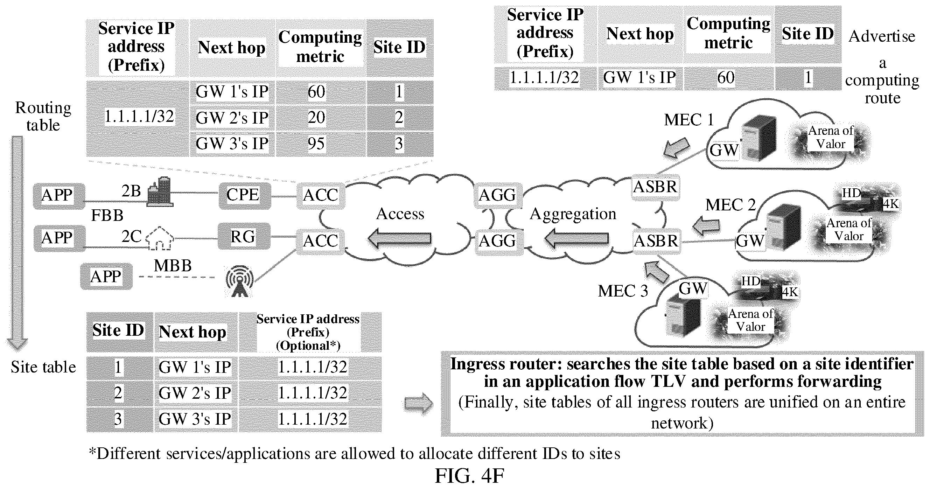

Optionally, when each MEC site advertises a computing route (that is, the MEC site sends computing information to the ingress router), local site identification information may be added to the route. For example, the local site identification information may be added to a routing protocol such as the border gateway protocol (Border Gateway Protocol, BGP), the open shortest path first (Open Shortest Path First, OSPF) protocol, or the intermediate system-to-intermediate system (Intermediate System-to-Intermediate System, IS-IS) protocol. After receiving the route, the ingress router may generate a destination information table based on the site identification information and corresponding routing information. It should be noted that, the site identifier of the MEC site may be generated by a gateway device of the MEC site, and announced to enter a network; or may be generated by an autonomous system boundary router ASBR of a network, and announced to enter a network; or may be specified by a manager of the MEC site. This is not limited herein. For example, FIG. 4F is a schematic flowchart of announcing a site identifier by using an extended routing protocol according to an embodiment of the present invention. In the figure, an example in which a manager of an MEC site specifies a site identifier and announces that the identifier enters a network is used. First, a manager of MEC 1 may allocate a site identifier " 1" to the MEC, and deliver identifier configuration to a gateway device GW through a network controller or manually. Next, the gateway device generates a computing route, where the route includes the site identifier (that is, identification information), and information such as an original service IP, a next hop (that is, routing information), and a computing status (that is, computing information), so that the gateway transfers the computing route including the site identifier to a network boundary device ASBR. Then, the ASBR propagates the computing route including the site identifier in the network or across a plurality of network domains by using a routing protocol, and finally transfers the computing route to an ingress router ACC of the network. Finally, after receiving the computing route including the site identifier, the ingress router of the network generates a site table, that is, a destination information table. It should be noted that, in a process of generating the destination information table, the site identifier and the next-hop information (that is, the routing information) may be associated, to obtain a mapping relationship between the site identifier and the routing information. In addition, a forwarding port or tunnel information obtained by performing route iteration on the next-hop information may be associated with the site identifier, to facilitate subsequent data packet forwarding.

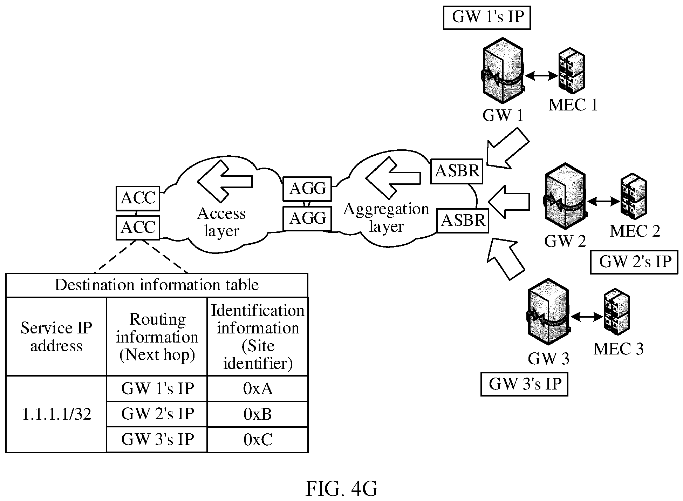

In a possible implementation, the method further includes: The network device generates identification information of each candidate destination according to a preset algorithm, and generates the destination information table based on the identification information and the corresponding routing information of each candidate destination. Because the identification information of the candidate destination is valid only locally on the ingress router, it is only required that the ingress router can identify the information. Specifically, the identification information of the candidate destination may be generated by the ingress router according to the preset algorithm, and a mapping relationship between identification information of a plurality of candidate destinations and corresponding routing information may be recorded in the destination information table. When receiving the initial data packet of the client, the ingress router may determine, based on identification information of the target destination, the destination selection information, and then write the destination selection information into the initial data packet. When receiving a request data packet of the client, the ingress router may determine, by searching the destination information table, target routing information corresponding to the destination selection information, to ensure continuity of a client service and improve user experience. In addition, because the identification information of each candidate destination is generated by the ingress router according to the preset algorithm, a process of synchronizing the identification information of each candidate site on the entire network is omitted. For example, FIG. 4G is another schematic flowchart of generating a destination information table according to an embodiment of the present invention. In the figure, an ingress router generates a site identifier for an MEC site only according to a preset algorithm, for example, a hash algorithm, and then generates a destination information table based on a mapping relationship between the site identifier and a next hop (routing information).

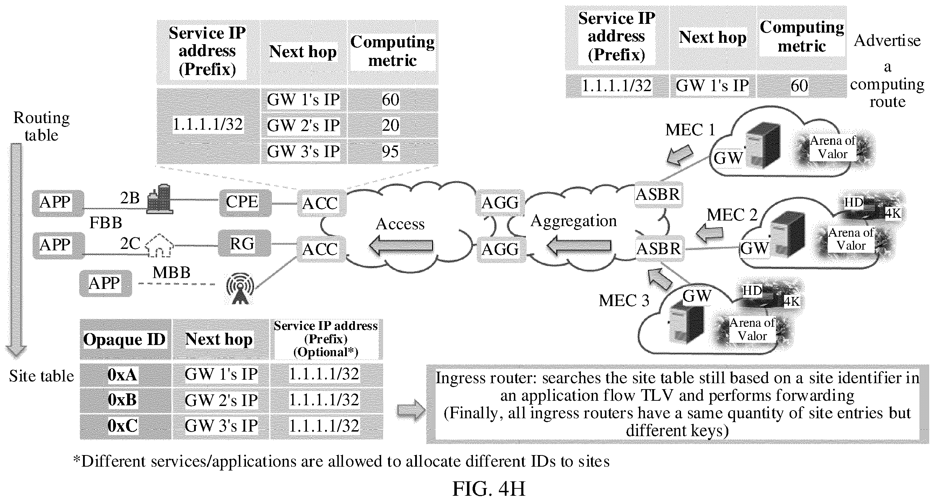

Optionally, when each MEC site advertises a computing route (that is, the MEC site advertises a computing route to the ingress router), the ingress router of the network may discover a new site (for example, an MEC site without a site identifier) based on information in the route, generate a site identifier locally valid on the router for the site, and generate a destination information table. For example, FIG. 4H is a schematic flowchart of generating a site identifier by an ingress router according to an embodiment of the present invention. In the figure, if next-hop information (routing information) of a computing route does not exist in a local routing information base of the ingress router, the ingress router generates a site identifier (that is, identification information) for an MEC site corresponding to the routing information, and then the ingress router generates a site table (destination information table) used to record a mapping relationship between the site identifier and the corresponding routing information. As shown in the figure, "0xA" corresponds to "GW 1's IP", "0xB" corresponds to "GW 2's IP", and "0xC" corresponds to "GW 3's IP". In conclusion, when the ingress router generates the site identifier, because different ingress routers may use different site identifiers for a same MEC site, in a mobility scenario, that is, when a user terminal is migrated between different ingress routers, site identification information may need to be synchronized between the ingress routers. Optionally, in the foregoing process, an opaque identifier number segment (for example, the O-flag in FIG. 4D) may be configured for different ingress routers in advance, to avoid an identifier conflict in a process of synchronizing the site identifier. By using an opaque identifier (for example, identification information of a candidate destination generated by the ingress router), although identification information (that is, identification information of a plurality of candidate MEC sites) may still need to be synchronized between a plurality of ingress routers, large-scale information synchronization can be avoided. In other words, synchronization in a span from an ACC to a GW of an MEC can be avoided, and synchronization only needs to be performed between ingress network devices of the network.

Step S405: The network device sends, to the target destination, the second packet that carries the target identification information.

Specifically, after the ingress router determines the target destination, the ingress router schedules and forwards the initial data packet to the target destination, to trigger the target destination to generate a response packet that carries the target identification information, where the response packet is a response packet for the second packet. It should be noted that the response packet (that is, the second packet) for the initial data packet carries the target identification information, so that the client records the target identification information when being notified that the data flow has been established, and the information can be carried when the client initiates a request again.

Step S406: The target destination receives the second packet that is of the client and that is forwarded by the network device.

Specifically, the second packet includes the target identification information written by the network device. After the target destination receives the initial data packet (that is, the second packet) of the client, the target destination learns that a new data flow with the client is to be established.

Step S407: The target destination processes the second packet to generate a second response packet, and sends the second response packet to the client.

Specifically, the second response packet includes the target identification information. After responding to the initial data packet, the target destination sends the corresponding response data packet to the client, to notify the client that a new data flow has been established, and notifies the client of the target identification information of the target destination, so that the information can be carried when the client initiates a request subsequently.

Step S408: The client receives the second response packet sent by the target destination.

Specifically, the second response packet is the response data packet for the second packet, and the second response packet includes the target identification information. The client receives the response data packet sent by the target destination, so that a new data flow is established between the client and the target destination.

Step S409: The client records the target identification information.

Specifically, because the response data packet (that is, the second response packet) that is of the initial packet and that is received by the client carries the destination selection information, the client may record the destination selection information, so that the information is carried when the client initiates a request again.

Next, when the client initiates a request again, the foregoing step S301 to step S307 may be performed, so that the target destination responds to the request data packet of the client. For detailed descriptions, refer to the foregoing descriptions of step S301 to step S307. Details are not described herein again.

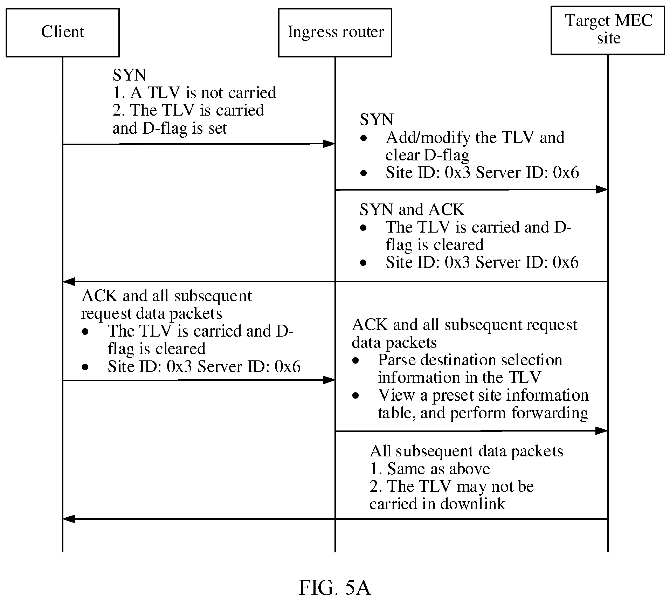

To describe the packet processing method in this embodiment of this application in more detail, the following uses an example in which a client establishes a TCP data flow with a target MEC site. FIG. 5A is a flowchart of a TCP data flow-based packet processing method according to an embodiment of the present invention. In the figure, an ingress router receives an SYN (which is the initial data packet mentioned above and is also the second packet) sent by the client, and then the ingress router selects a target MEC site for the client based on computing information of each MEC site. It is assumed that destination selection information of the selected target MEC site includes a target MEC site identifier "0x3" and a server identifier "0x6", if the SYN does not carry a TLV (as shown in FIG. 4D, the TLV may be understood as an extension header recording the target MEC site identifier), the ingress router adds the TLV to the SYN, records "0x3" and "0x6", and clears D-flag in the TLV, which indicates that the target MEC site is determined. If the SYN carries a TLV, the ingress router writes "0x3" and "0x6" into the TLV and clears D-flag. Next, the target MEC site responds to the SYN and sends the SYN and ACK (where the SYN and the ACK are the response data packets of the initial packet mentioned above) to the client, and the TLV that records "0x3" and "0x6" is carried. Further, after receiving the SYN and the ACK sent by the target MEC site, the client records destination selection information in the TLV. When the client initiates a request again, the information is carried. Then, after receiving a request data packet that carries the destination selection information, the ingress router parses the destination selection information in the TLV, searches the destination information table to determine target routing information corresponding to the destination selection information, and forwards the request data packet to the target MEC site. Finally, the target MEC site responds to the request data packet of the client, and generates a first response packet. Then, the target MEC site sends the first response packet to the client. The first response packet may carry the TLV, or may not continue carrying the TLV.

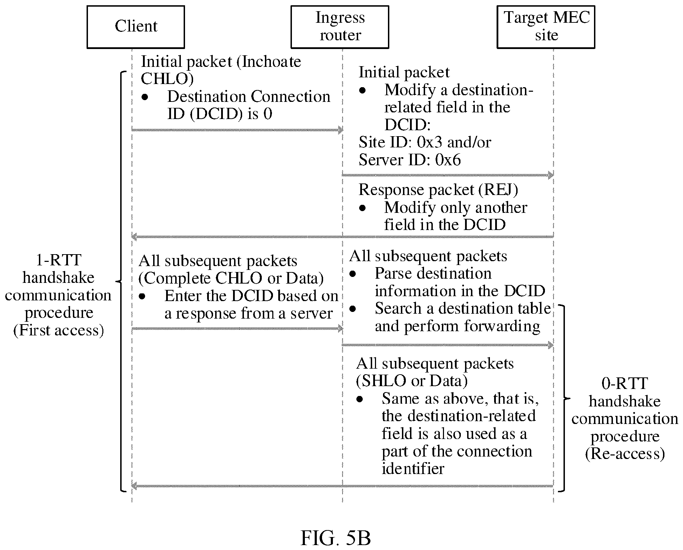

The following uses an example in which a client establishes a QUIC data flow with a target MEC site. FIG. 5B is a flowchart of a QUIC data flow-based packet processing method according to an embodiment of the present invention. In the figure, an ingress router receives an initial packet (Inchoate Client Hello, Inchoate CHLO) sent by the client, and then the ingress router selects a target MEC site for the client based on computing information of each MEC site. It is assumed that an identifier of the selected target MEC site is "0x3". Because the initial packet includes a destination connection identifier (Destination Connection ID, DCID), which may be understood as an extension header used to record destination selection information, the ingress router modifies a destination related field in the DCID, so that the destination related field carries the target MEC site identifier "0x3". In addition, a server identifier ("0x6") may be further recorded in the DCID. Next, the target MEC site responds to the initial packet and sends a response packet (for example, the second response packet mentioned above) to the client, and the response packet carries destination selection information of the target MEC site. Further, after receiving the response packet sent by the target MEC site, the client records the destination selection information. When the client initiates a request again, the information is carried. Then, after receiving a request data packet that carries the destination selection information, the ingress router parses the destination selection information in the DCID, searches the destination information table to determine target routing information corresponding to the destination selection information, and forwards the request data packet to the target MEC site. Finally, the target MEC site responds to the request data packet of the client. Optionally, in the QUIC data flow, the destination related field in the DCID may also be used as a part of the connection identifier of the data flow.

In a possible implementation, the method further includes: The network device establishes a temporary session table, where the temporary session table includes a mapping relationship between the traffic identifier of the client and the corresponding target routing information. The network device receives a pseudo initial packet sent by the client, where the pseudo initial packet includes the traffic identifier. The network device determines, based on the traffic identifier in the pseudo initial packet and the temporary session table, the target routing information corresponding to the traffic identifier in the pseudo initial packet; and sends the pseudo initial packet to the target destination based on the target routing information, to trigger the target destination to process the pseudo initial packet. Specifically, at an initial stage of establishing a data flow between the client and the server, that is, when the client does not receive a response data packet that carries destination selection information, the client may send a plurality of data packets (which are also referred to as pseudo initial packets) to the server. Because these data packets do not carry destination selection information, after receiving these data packets, the ingress router may schedule these data packets to different destinations for response, and this causes a problem such as a client service interruption. In this embodiment of the present invention, the ingress router records the mapping relationship between the traffic identifier and the target routing information by establishing the temporary session table. For example, the traffic identifier includes but is not limited to a triplet, a quintuple, a flow label Flow Label, and the like, that is, the traffic identifier includes information such as a source IP address in the initial data packet. When the pseudo initial packet is received, the target routing information corresponding to the traffic identifier in the pseudo initial packet is determined by searching the temporary session table, so that all data packets initiated by a same client are scheduled and forwarded to a same destination for response, to ensuring continuity of a client service and improve user experience. It should be noted that duration of the pseudo initial packet is very short, and is usually within only a few seconds. Therefore, it may be considered that traffic identifiers of these data packets are consistent with that in the initial data packet. In addition, timeout deletion time/aging time in temporary session entries may be set to a second level or a millisecond level, last hit time (lastseen) of the entry does not need to be recorded, and only entry creation time needs to be recorded.

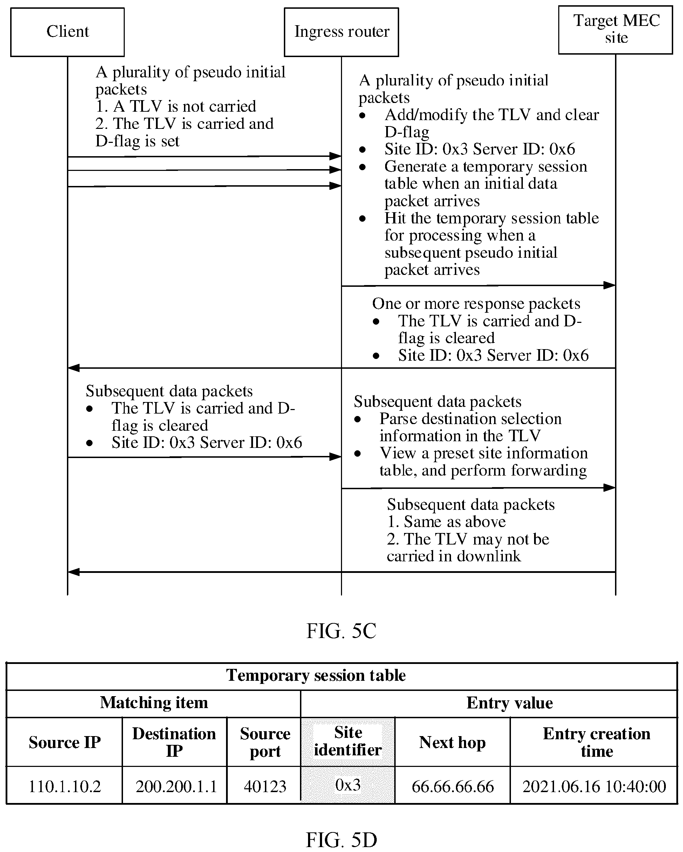

For example, FIG. 5C is a schematic flowchart of a packet processing method with a pseudo initial packet according to an embodiment of the present invention. In the figure, after a client initiates an initial data packet, it is assumed that a source IP address (which may be one of a traffic identifier) in the initial data packet is 110.1.10.2, and an ingress router selects a target MEC site for the initial data packet. It is also assumed that target routing information corresponding to the target MEC site is 66.66.66.66, and then a temporary session table is generated on the ingress router. FIG. 5D is a schematic diagram of a temporary session table according to an embodiment of the present invention. In the figure, a source IP address 110.1.10.2 and a next hop (the foregoing target routing information) 66.66.66.66 are recorded in the temporary session table. When the ingress router receives the pseudo initial packet, because the source IP address in the pseudo initial packet is 110.1.10.2, the ingress router may determine, by searching the temporary session table, that a next hop corresponding to 110.1.10.2 is 66.66.66.66, and schedules and forwards the pseudo initial packet to 66.66.66.66, so that a same MEC site responds to the data packet initiated by the client, to ensure continuity of a client service. It should be noted that, in addition to recording a mapping relationship between the source IP address and the target routing information, the temporary session table may further record information such as target destination selection information, a destination IP, a source port, a site identifier, and entry creation time.

In a possible implementation, the method further includes: The network device establishes a temporary session table, where the temporary session table includes a mapping relationship between the traffic identifier of the client and the corresponding destination selection information. The network device receives a pseudo initial packet sent by the client, where the pseudo initial packet includes the traffic identifier. The network device determines, based on the traffic identifier in the pseudo initial packet and the temporary session table, the destination selection information corresponding to the traffic identifier in the pseudo initial packet; and determines the target routing information based on the destination selection information, and sends the pseudo initial packet to the target destination based on the target routing information, to trigger the target destination to process the pseudo initial packet. Specifically, the temporary session table may further record a mapping relationship between the traffic identifier and the destination selection information. Further, the ingress router may indirectly determine the target routing information based on the traffic identifier. For example, the temporary session table records a mapping relationship between the traffic identifier of the client and the target destination selection information. The ingress router first determines, based on the traffic identifier in the pseudo initial packet, the corresponding target destination selection information, and then determines the target routing information based on the target destination selection information. Finally, the ingress router schedules and forwards the pseudo initial packet to the target destination based on the target routing information for response.

In a possible implementation, the method further includes: during updating of the target identification information, updating the target identification information that is of the target destination and that is in the destination information table, and updating the target identification information in the first packet. Specifically, the identification information of the target destination may be periodically updated (that is, the target identification information may be periodically updated), so that the destination selection information is more secure. Not only client privacy can be protected, but also network security can be improved.

In a possible implementation, during updating of the target identification information, the first response packet includes updated target identification information. Specifically, during updating of the destination selection information, the target destination adds the updated destination selection information to the response data packet, to notify the client that the destination selection information is updated. The identification information of the destination may be updated periodically, so that the destination selection information is more secure. Not only client privacy can be protected, but also network security can be improved.

In a possible implementation, during updating of the target identification information, the first response packet includes updated target identification information, and the method further includes: The network device records the updated target identification information, to enable the first packet to carry the updated target identification information. Specifically, during updating of the destination selection information, the response data packet received by the client carries the updated destination selection information, and the client records the updated destination selection information, so that the updated destination selection information is carried when the client initiates a request data packet again, and the ingress router schedules and forwards, based on the information, the request data packet to the target destination for response. The destination selection information of the target destination may be updated periodically, so that the destination selection information is more secure. Not only client privacy can be protected, but also network security can be improved.

In this embodiment of the present invention, because the destination selection information (that is, the target identification information) is allocated by the network, when client information changes, the destination selection information does not change, and the ingress router identifies the target destination based on the information, to avoid a problem of a service interruption caused by the change of the client information, ensure continuity of the client service, and improve user experience.

The methods in embodiments of the present invention are described in detail above, and a related apparatus in embodiments of the present invention is provided below.

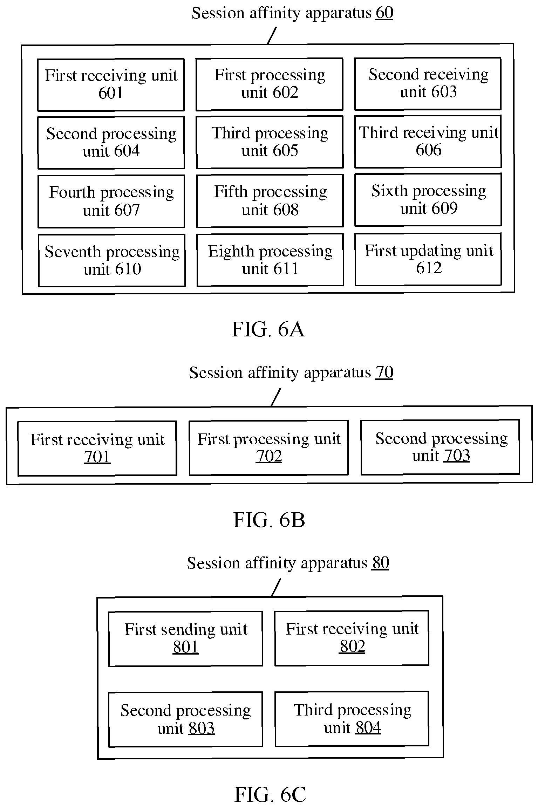

FIG. 6A is a first schematic apparatus diagram of a session affinity apparatus according to an embodiment of the present invention. The session affinity apparatus 60 is used in a first network device (for example, an ingress router), and may include a first receiving unit 601, a first processing unit 602, a second receiving unit 603, a second processing unit 604, a third processing unit 605, a third receiving unit 606, a fourth processing unit 607, a fifth processing unit 608, a sixth processing unit 609, a seventh processing unit 610, an eighth processing unit 611, and a first updating unit 612. All the units are described in detail as follows:

The first receiving unit 601 is configured to receive a first packet sent by a client, where the first packet includes target identification information, the target identification information is used to identify a target destination, the target destination is a destination selected from N candidate destinations by the first network device for the client, and N is an integer greater than 0.

The first processing unit 602 is configured to: determine the target destination based on the target identification information, and forward the first packet to the target destination, to trigger the target destination to process the first packet.

In a possible implementation, the first processing unit 602 is specifically configured to: determine, based on a destination information table and the target identification information, target routing information corresponding to the target destination, where the destination information table includes a mapping relationship between identification information of the N candidate destinations and corresponding routing information; and forward the first packet to the target destination based on the target routing information.

In a possible implementation, the apparatus further includes: the second receiving unit 603, configured to receive a second packet sent by the client, where the second packet includes a traffic identifier, and the traffic identifier includes one or more of the following information: a triplet, a quintuple, a flow label, or a service identifier of the second packet; and the second processing unit 604, configured to select one of the N candidate destinations as the target destination based on the traffic identifier.

In a possible implementation, the apparatus further includes the third processing unit 605, configured to: based on the selected target destination, obtain the target identification information, and add the target identification information to the second packet, where the third processing unit 605 is further configured to send the second packet that carries the target identification information to the target destination, to trigger the target destination to generate a response packet that carries the target identification information, where the response packet is a response packet for the second packet.

In a possible implementation, the second processing unit 604 is specifically configured to: search a computing routing table corresponding to the N candidate destinations, and obtain computing information of each of the N candidate destinations; and select one of the N candidate destinations as the target destination based on the computing information of each candidate destination, where the computing information includes one or more of current load status information and network quality information of the corresponding candidate destination.

In a possible implementation, the apparatus further includes: the third receiving unit 606, configured to receive a computing route sent by each candidate destination, where the computing route includes the computing information and the routing information of the corresponding candidate destination; and the fourth processing unit 607, configured to generate the computing routing table, where the computing routing table includes the computing information and the routing information of each candidate destination.

In a possible implementation, when the computing information further includes identification information of the corresponding candidate destination, the apparatus further includes the fifth processing unit 608, configured to generate the destination information table based on the identification information and the corresponding routing information of each candidate destination.

In a possible implementation, the apparatus further includes the sixth processing unit 609, configured to: generate identification information of each candidate destination according to a preset algorithm, and generate the destination information table based on the identification information and the corresponding routing information of each candidate destination.

In a possible implementation, the apparatus further includes the seventh processing unit 610, configured to: establish a temporary session table, where the temporary session table includes a mapping relationship between the traffic identifier of the client and the corresponding target routing information; and receive a pseudo initial packet sent by the client, where the pseudo initial packet includes the traffic identifier, where the seventh processing unit 610 is further configured to: determine, based on the traffic identifier in the pseudo initial packet and the temporary session table, the target routing information corresponding to the traffic identifier in the pseudo initial packet; and send the pseudo initial packet to the target destination based on the target routing information, to trigger the target destination to process the pseudo initial packet.

In a possible implementation, the apparatus further includes: the eighth processing unit 611, configured to: establish a temporary session table, where the temporary session table includes a mapping relationship between the traffic identifier of the client and the target identification information of the corresponding target destination; and receive a pseudo initial packet sent by the client, where the pseudo initial packet includes the traffic identifier, where the eighth processing unit 611 is further configured to: determine, based on the traffic identifier in the pseudo initial packet and the temporary session table, the target identification information corresponding to the traffic identifier in the pseudo initial packet; and determine the target routing information based on the target identification information, and send the pseudo initial packet to the target destination based on the target routing information, to trigger the target destination to process the pseudo initial packet.

In a possible implementation, the target destination includes one or more of a multi-access edge computing MEC site, a data center, a server, or a service instance.

In a possible implementation, when the target destination includes the MEC site or the data center, the target identification information includes selection information of a site of the target destination, or the target identification information includes selection information of a site of the target destination and selection information of a server connected to a destination site.

In a possible implementation, when the target destination includes the server or the service instance, the target identification information includes selection information of the server or selection information of the service instance, or the target identification information includes selection information of the server and selection information of a site connected to the server, or the target identification information includes selection information of the service instance and selection information of a site connected to service implementation.

In a possible implementation, the apparatus further includes the first updating unit 612, configured to: during updating of the target identification information, update the target identification information that is of the target destination and that is in the destination information table, and update the target identification information in the first packet.

It should be noted that, for functions of the functional units in the session affinity apparatus 60 described in this embodiment of the present invention, refer to related descriptions of the steps performed by the first network device (for example, the ingress router) in the method embodiments in FIG. 3A and FIG. 4A. Details are not described herein again.

FIG. 6B is a second schematic apparatus diagram of a session affinity apparatus according to an embodiment of the present invention. The session affinity apparatus 70 is used in a second network device, and may include a first receiving unit 701, a first processing unit 702, and a second processing unit 703. All the units are described in detail as follows:

The first receiving unit 701 is configured to receive a first packet that is of a client and that is forwarded by a first network device, where the first packet includes target identification information, the target identification information is used to identify the second network device, the second network device is a destination selected from N candidate destinations by the first network device for the client, and N is an integer greater than 0.

The first processing unit 702 is configured to: process the first packet to generate a first response packet, and send the first response packet to the client.

In a possible implementation, the apparatus further includes the second processing unit 703, configured to receive a second packet that is of the client and that is forwarded by the first network device, where the second packet includes the target identification information written by the first network device, where the second processing unit 703 is configured to: process the second packet to generate a second response packet, and send the second response packet to the client, where the second response packet includes the target identification information.

In a possible implementation, during updating of the target identification information, the first response packet includes updated target identification information.

It should be noted that, for functions of the functional units in the session affinity apparatus 70 described in this embodiment of the present invention, refer to related descriptions of the steps performed by the target destination in the method embodiments in FIG. 3A and FIG. 4A. Details are not described herein again.

FIG. 6C is a third schematic apparatus diagram of a session affinity apparatus according to an embodiment of the present invention. The session affinity apparatus 80 is used in a client, and may include a first sending unit 801, a first receiving unit 802, a second processing unit 803, and a third processing unit 804. All the units are described in detail as follows:

The first sending unit 801 is configured to send a first packet to a first network device, where the first packet includes target identification information, the target identification information is used to identify a target destination, the target destination is a destination selected from N candidate destinations by the first network device for the client, and N is an integer greater than 0.

The first receiving unit 802 is configured to receive a first response packet sent by the target destination, where the first response packet is a response packet for the first packet.

In a possible implementation, the apparatus further includes the second processing unit 803, configured to: send a second packet to the first network device, and receive a second response packet sent by the target destination, where the second response packet is a response packet for the second packet, and the second response packet includes the target identification information, where the second processing unit 803 is further configured to record the target identification information, to enable the first packet to carry the target identification information.

In a possible implementation, during updating of the target identification information, the first response packet includes updated target identification information, and the apparatus further includes the third processing unit 804, configured to record the updated target identification information, to enable the first packet to carry the updated target identification information.

It should be noted that, for functions of the functional units in the session affinity apparatus 70 described in this embodiment of the present invention, refer to related descriptions of the steps performed by the client in the method embodiments in FIG. 3A and FIG. 4A. Details are not described herein again.

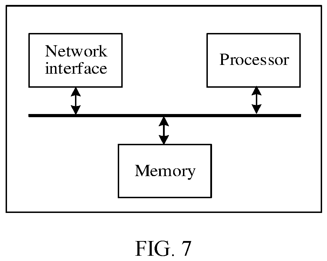

An embodiment of the present invention provides a network device. FIG. 7 is a schematic diagram of a hardware structure of a network device according to an embodiment of the present invention. The network device may include a network interface, a processor, and a memory. The network interface is configured to receive a packet, data information, or the like. The memory is configured to store program instructions. The processor is configured to perform related processing steps in the related device in the foregoing embodiments. The network interface may be an Ethernet interface or the like.

An embodiment of the present invention provides a semiconductor chip. The semiconductor chip may include the packet processing apparatus provided in any implementation of the foregoing apparatus embodiments.

An embodiment of the present invention provides a system-on-a-chip SoC chip. The SoC chip includes the packet processing apparatus provided in any implementation of the foregoing apparatus embodiments, and an internal memory and an external memory that are coupled to the packet processing apparatus. The SoC chip may include a chip, or may include a chip and another discrete component.

An embodiment of the present invention provides a chip system. The chip system includes the packet processing apparatus provided in any implementation of the foregoing apparatus embodiments. In a possible design, the chip system further includes a memory, and the memory is configured to store program instructions and data that are necessary for or related to the packet processing apparatus in a running process. The chip system may include a chip, or may include a chip and another discrete component.

An embodiment of the present invention provides a host. The host includes a processor, and the processor is configured to perform the packet processing method provided in any implementation of the foregoing apparatus embodiments. The host may further include a memory. The memory is configured to be coupled to the processor, and stores program instructions and data that are necessary for the host. The host may further include a communication interface, configured for communication between the host and another device or a communication network.

An embodiment of the present invention provides a switch. The switch includes a processor, and the processor is configured to perform the packet processing method provided in any implementation of the foregoing method embodiments. The switch may further include a memory. The memory is configured to be coupled to the processor, and stores program instructions and data that are necessary for the switch. The switch may further include a communication interface, configured for communication between the switch and another device or a communication network.

An embodiment of the present invention provides a computer program. The computer program includes instructions, and when the computer program is executed by a multi-core processor, a host is enabled to perform the processing method procedure of the multi-core processor in any one of the foregoing method embodiments.

An embodiment of the present invention provides a computer-readable storage medium. The computer-readable storage medium stores a computer program, and when the computer program is executed by a host, the processing method procedure of the multi-core processor in any one of the foregoing method embodiments is implemented.

An embodiment of the present invention provides a computer non-transitory storage medium, including instructions. When the instructions are run on an intermediate node, the intermediate node is enabled to perform the packet processing method according to any one of the foregoing items.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further understood by the person skilled in the art that embodiments described in this specification are all example embodiments, and the involved actions and modules are not necessarily required by this application.

In the several embodiments provided in this application, it should be understood that the disclosed apparatus may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like, and may be specifically a processor in a computer device) to perform all or a part of the steps of the methods described in embodiments of this application. The foregoing storage medium includes any medium that can store program code, such as a USB flash drive, a removable hard disk, a magnetic disk, an optical disc, a read-only memory (Read-Only Memory, ROM for short), or a random access memory (Random Access Memory, RAM for short).

In conclusion, the foregoing embodiments are merely intended to describe the technical solutions of this application, but not to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of embodiments of this application.

## Claims

1. A packet processing method, applied to a network device, wherein the method comprises:
receiving a first packet sent by a client, wherein the first packet comprises target identification information, the target identification information is used to identify a target destination, the target destination is a destination selected from N candidate destinations by the network device for the client, and N is an integer greater than 0; and
determining the target destination based on the target identification information, and forwarding the first packet to the target destination, to trigger the target destination to process the first packet.

2. The method according to claim 1, wherein the determining the target destination based on the target identification information, and forwarding the first packet to the target destination comprises:
determining, based on a destination information table and the target identification information, target routing information corresponding to the target destination, wherein the destination information table comprises a mapping relationship between identification information of the N candidate destinations and corresponding routing information; and
forwarding the first packet to the target destination based on the target routing information.

3. The method according to claim 2, wherein before the receiving a first packet sent by a client, the method further comprises:
receiving a second packet sent by the client, wherein the second packet comprises a traffic identifier, and the traffic identifier comprises one or more of the following information: a triplet, a quintuple, a flow label, or a service identifier of the second packet; and
selecting one of the N candidate destinations as the target destination based on the traffic identifier.

4. The method according to claim 3, wherein the method further comprises:
based on the selected target destination, obtaining the target identification information, and adding the target identification information to the second packet; and
sending the second packet that carries the target identification information to the target destination, to trigger the target destination to generate a response packet that carries the target identification information, wherein the response packet is a response packet for the second packet.

5. The method according to claim 3 or 4, wherein the selecting one of the N candidate destinations as the target destination based on the traffic identifier comprises:
searching a computing routing table corresponding to the N candidate destinations, and obtaining computing information of each of the N candidate destinations; and
selecting one of the N candidate destinations as the target destination based on the computing information of each candidate destination, wherein the computing information comprises one or more of current load status information and network quality information of the corresponding candidate destination.

6. The method according to claim 5, wherein the method further comprises:
receiving a computing route sent by each candidate destination, wherein the computing route comprises the computing information and the routing information of the corresponding candidate destination; and
generating the computing routing table, wherein the computing routing table comprises the computing information and the routing information of each candidate destination.

7. The method according to claim 6, wherein when the computing information further comprises identification information of the corresponding candidate destination, the method further comprises:
generating the destination information table based on the identification information and the corresponding routing information of each candidate destination.

8. The method according to claim 6, wherein the method further comprises:
generating identification information of each candidate destination according to a preset algorithm, and generating the destination information table based on the identification information and the corresponding routing information of each candidate destination.

9. The method according to any one of claims 3 to 8, wherein the method further comprises:
establishing a temporary session table, wherein the temporary session table comprises a mapping relationship between the traffic identifier of the client and the corresponding target routing information;
receiving a pseudo initial packet sent by the client, wherein the pseudo initial packet comprises the traffic identifier;
determining, based on the traffic identifier in the pseudo initial packet and the temporary session table, the target routing information corresponding to the traffic identifier in the pseudo initial packet; and
sending the pseudo initial packet to the target destination based on the target routing information, to trigger the target destination to process the pseudo initial packet.

10. The method according to any one of claims 3 to 8, wherein the method further comprises:
establishing a temporary session table, wherein the temporary session table comprises a mapping relationship between the traffic identifier of the client and the target identification information of the corresponding target destination;
receiving a pseudo initial packet sent by the client, wherein the pseudo initial packet comprises the traffic identifier;
determining, based on the traffic identifier in the pseudo initial packet and the temporary session table, the target identification information corresponding to the traffic identifier in the pseudo initial packet; and
determining the target routing information based on the target identification information, and sending the pseudo initial packet to the target destination based on the target routing information, to trigger the target destination to process the pseudo initial packet.

11. The method according to claim 1, wherein the target destination comprises one or more of a multi-access edge computing MEC site, a data center, a server, or a service instance, and the network device comprises one or more of a user-side network gateway and a user ingress router.

12. The method according to claim 11, wherein when the target destination comprises the MEC site or the data center, the target identification information comprises selection information of a site of the target destination, or the target identification information comprises selection information of a site of the target destination and selection information of a server connected to a destination site.

13. The method according to claim 11, wherein when the target destination comprises the server or the service instance, the target identification information comprises selection information of the server or selection information of the service instance; or
the target identification information comprises selection information of the server and selection information of a site connected to the server, or the target identification information comprises selection information of the service instance and selection information of a site connected to service instance.

14. The method according to any one of claims 3 to 13, wherein the method further comprises:
during updating of the target identification information, updating the target identification information that is of the target destination and that is in the destination information table, and updating the target identification information in the first packet.

15. A packet processing method, applied to a target destination and comprising:
receiving a first packet that is of a client and that is forwarded by a network device, wherein the first packet comprises target identification information, the target identification information is used to identify the target destination, the target destination is a destination selected from N candidate destinations by the network device for the client, and N is an integer greater than 0; and
processing the first packet to generate a first response packet, and sending the first response packet to the client.

16. The method according to claim 15, wherein before the receiving a first packet that is of a client and that is forwarded by a network device, the method further comprises:
receiving a second packet that is of the client and that is forwarded by the network device, wherein the second packet comprises the target identification information written by the network device; and
processing the second packet to generate a second response packet, and sending the second response packet to the client, wherein the second response packet comprises the target identification information.

17. The method according to claim 15 or 16, wherein during updating of the target identification information, the first response packet comprises updated target identification information.

18. A packet processing method, applied to a client and comprising:
sending a first packet to a network device, wherein the first packet comprises target identification information, the target identification information is used to identify a target destination, the target destination is a destination selected from N candidate destinations by the network device for the client, and N is an integer greater than 0; and
receiving a first response packet sent by the target destination, wherein the first response packet is a response packet for the first packet.

19. The method according to claim 18, wherein the method further comprises:
sending a second packet to the network device;
receiving a second response packet sent by the target destination, wherein the second response packet is a response packet for the second packet, and the second response packet comprises the target identification information; and
recording the target identification information, to enable the first packet to carry the target identification information.

20. The method according to claim 18 or 19, wherein during updating of the target identification information, the first response packet comprises updated target identification information, and the method further comprises:
recording the updated target identification information, to enable the first packet to carry the updated target identification information.

21. A packet processing apparatus, used in a first network device, wherein the apparatus comprises:
a first receiving unit, configured to receive a first packet sent by a client, wherein the first packet comprises target identification information, the target identification information is used to identify a target destination, the target destination is a destination selected from N candidate destinations by the first network device for the client, and N is an integer greater than 0; and
a first processing unit, configured to: determine the target destination based on the target identification information, and forward the first packet to the target destination, to trigger the target destination to process the first packet.

22. The apparatus according to claim 21, wherein the first processing unit is specifically configured to:
determine, based on a destination information table and the target identification information, target routing information corresponding to the target destination, wherein the destination information table comprises a mapping relationship between identification information of the N candidate destinations and corresponding routing information; and
forward the first packet to the target destination based on the target routing information.

23. The apparatus according to claim 22, wherein the apparatus further comprises:
a second receiving unit, configured to receive a second packet sent by the client, wherein the second packet comprises a traffic identifier, and the traffic identifier comprises one or more of the following information: a triplet, a quintuple, a flow label, or a service identifier of the second packet; and
a second processing unit, configured to select one of the N candidate destinations as the target destination based on the traffic identifier.

24. The apparatus according to claim 23, wherein the apparatus further comprises:
a third processing unit, configured to: based on the selected target destination, obtain the target identification information, and add the target identification information to the second packet, wherein
the third processing unit is further configured to send the second packet that carries the target identification information to the target destination, to trigger the target destination to generate a response packet that carries the target identification information, wherein the response packet is a response packet for the second packet.

25. The apparatus according to claim 23 or 24, wherein the second processing unit is specifically configured to:
search a computing routing table corresponding to the N candidate destinations, and obtain computing information of each of the N candidate destinations; and
select one of the N candidate destinations as the target destination based on the computing information of each candidate destination, wherein the computing information comprises one or more of current load status information and network quality information of the corresponding candidate destination.

26. The apparatus according to claim 25, wherein the apparatus further comprises:
a third receiving unit, configured to receive a computing route sent by each candidate destination, wherein the computing route comprises the computing information and the routing information of the corresponding candidate destination; and
a fourth processing unit, configured to generate the computing routing table, wherein the computing routing table comprises the computing information and the routing information of each candidate destination.

27. The apparatus according to claim 26, wherein when the computing information further comprises identification information of the corresponding candidate destination, the apparatus further comprises:
a fifth processing unit, configured to generate the destination information table based on the identification information and the corresponding routing information of each candidate destination.

28. The apparatus according to claim 26, wherein the apparatus further comprises:
a sixth processing unit, configured to: generate identification information of each candidate destination according to a preset algorithm, and generate the destination information table based on the identification information and the corresponding routing information of each candidate destination.

29. The apparatus according to any one of claims 23 to 28, wherein the apparatus further comprises:
a seventh processing unit, configured to: establish a temporary session table, wherein the temporary session table comprises a mapping relationship between the traffic identifier of the client and the corresponding target routing information; and receive a pseudo initial packet sent by the client, wherein the pseudo initial packet comprises the traffic identifier, wherein
the seventh processing unit is further configured to: determine, based on the traffic identifier in the pseudo initial packet and the temporary session table, the target routing information corresponding to the traffic identifier in the pseudo initial packet; and send the pseudo initial packet to the target destination based on the target routing information, to trigger the target destination to process the pseudo initial packet.

30. The apparatus according to any one of claims 23 to 28, wherein the apparatus further comprises:
an eighth processing unit, configured to: establish a temporary session table, wherein the temporary session table comprises a mapping relationship between the traffic identifier of the client and the target identification information of the corresponding target destination; and receive a pseudo initial packet sent by the client, wherein the pseudo initial packet comprises the traffic identifier, wherein
the eighth processing unit is further configured to: determine, based on the traffic identifier in the pseudo initial packet and the temporary session table, the target identification information corresponding to the traffic identifier in the pseudo initial packet; and determine the target routing information based on the target identification information, and send the pseudo initial packet to the target destination based on the target routing information, to trigger the target destination to process the pseudo initial packet.

31. The apparatus according to claim 21, wherein the target destination comprises one or more of a multi-access edge computing MEC site, a data center, a server, or a service instance.

32. The apparatus according to claim 31, wherein when the target destination comprises the MEC site or the data center, the target identification information comprises selection information of a site of the target destination, or the target identification information comprises selection information of a site of the target destination and selection information of a server connected to a destination site.

33. The apparatus according to claim 21, wherein when the target destination comprises the server or the service instance, the target identification information comprises selection information of the server or selection information of the service instance; or
the target identification information comprises selection information of the server and selection information of a site connected to the server, or the target identification information comprises selection information of the service instance and selection information of a site connected to service instance.

34. The apparatus according to any one of claims 23 to 33, wherein the apparatus further comprises:
a first updating unit, configured to: during updating of the target identification information, update the target identification information that is of the target destination and that is in the destination information table, and update the target identification information in the first packet.

35. A packet processing apparatus, used in a second network device and comprising:
a first receiving unit, configured to receive a first packet that is of a client and that is forwarded by a first network device, wherein the first packet comprises target identification information, the target identification information is used to identify the second network device, the second network device is a destination selected from N candidate destinations by the first network device for the client, and N is an integer greater than 0; and
a first processing unit, configured to: process the first packet to generate a first response packet, and send the first response packet to the client.

36. The apparatus according to claim 35, wherein the apparatus further comprises:
a second processing unit, configured to receive a second packet that is of the client and that is forwarded by the first network device, wherein the second packet comprises the target identification information written by the first network device, wherein
the second processing unit is configured to: process the second packet to generate a second response packet, and send the second response packet to the client, wherein the second response packet comprises the target identification information.

37. The apparatus according to claim 35 or 36, wherein during updating of the target identification information, the first response packet comprises updated target identification information.

38. A packet processing apparatus, used in a client and comprising:
a first sending unit, configured to send a first packet to a first network device, wherein the first packet comprises target identification information, the target identification information is used to identify a target destination, the target destination is a destination selected from N candidate destinations by the first network device for the client, and N is an integer greater than 0; and
a first receiving unit, configured to receive a first response packet sent by the target destination, wherein the first response packet is a response packet for the first packet.

39. The apparatus according to claim 38, wherein the apparatus further comprises:
a second processing unit, configured to: send a second packet to the first network device, and receive a second response packet sent by the target destination, wherein the second response packet is a response packet for the second packet, and the second response packet comprises the target identification information, wherein
the second processing unit is further configured to record the target identification information, to enable the first packet to carry the target identification information.

40. The apparatus according to claim 38 or 39, wherein during updating of the target identification information, the first response packet comprises updated target identification information, and the apparatus further comprises:
a third processing unit, configured to record the updated target identification information, to enable the first packet to carry the updated target identification information.

41. A computer non-transitory storage medium comprising instructions, wherein when the instructions are run on a computer, the computer is enabled to perform the method according to any one of claims 1 to 20.
